(19) Europäisches Patentamt / European Patent Office / Office européen des brevets

(11) **EP 3 334 611 B1**

(12) **FASCICULE DE BREVET EUROPEEN**

(45) Date de publication et mention de la délivrance du brevet:
**02.10.2019 Bulletin 2019/40**

(21) Numéro de dépôt: **16750390.3**

(22) Date de dépôt: **18.07.2016**

(51) Int Cl.:
*B42D 25/45* (2014.01)   *G02B 5/00* (2006.01)
*G02B 5/18* (2006.01)   *B42D 25/373* (2014.01)

(86) Numéro de dépôt international:
**PCT/EP2016/067013**

(87) Numéro de publication internationale:
**WO 2017/025277 (16.02.2017 Gazette 2017/07)**

(54) **COMPOSANT OPTIQUE DE SÉCURITÉ A EFFET PLASMONIQUE ET PROCÉDÉ DE FABRICATION D'UN TEL COMPOSANT**

OPTISCHES SICHERHEITSBAUELEMENT MIT PLASMONENEFFEKT UND VERFAHREN ZUR HERSTELLUNG SOLCH EINER KOMPONENTE

OPTICAL SECURITY COMPONENT WITH PLASMON EFFECT AND METHOD FOR MANUFACTURING SUCH A COMPONENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.08.2015 FR 1557678**

(43) Date de publication de la demande:
**20.06.2018 Bulletin 2018/25**

(73) Titulaire: **SURYS**
**77600 Bussy-Saint-Georges (FR)**

(72) Inventeurs:
• **BASSET, Guillaume**
**68330 Huningue (FR)**
• **GALLINET, Benjamin**
**4133 Pratteln (CH)**
• **DÜMPELMANN, Luc**
**4055 Basel (CH)**
• **LUU-DINH, Angélique**
**68100 Mulhouse (FR)**
• **JEAN SAUVAGE, Vincent**
**87400 Saint Martin Terressus (FR)**
• **SCHNIEPER, Marc**
**1213 Onex (CH)**

(74) Mandataire: **Osha Liang**
**2, rue de la Paix**
**75002 Paris (FR)**

(56) Documents cités:
**WO-A1-2012/136777   WO-A1-2013/060817
US-A1- 2010 307 705**

## Description

### Domaine technique

La présente description concerne un composant optique de sécurité à résonance plasmonique et un procédé de fabrication d'un tel composant. Le composant optique de sécurité selon la présente description s'applique notamment au marquage de sécurité pour l'authentification d'objets de valeurs, et plus précisément l'authentification par observation en transmission.

### Etat de l'art

On connaît de nombreuses technologies pour l'authentification d'objets de valeur et notamment l'authentification de documents de valeur, tels que les billets de banque ou documents de voyage (passeports, cartes d'identité ou autres documents d'identification), ou pour l'authentification de produits au moyen d'étiquettes de marquage. Ces technologies visent à la production de composants optiques de sécurité dont les effets optiques en fonction des paramètres d'observation (orientation par rapport à l'axe d'observation, position et dimensions de la source lumineuse, etc.) prennent des configurations caractéristiques et vérifiables. Le but général de ces composants optiques est de fournir des effets nouveaux et différenciés, à partir de configurations physiques difficilement reproductibles ou imitables par un faussaire.

Parmi ces composants, les composants optiques de sécurité dits « à résonance plasmonique » permettent de générer des effets colorés en réflexion ou en transmission, qui résultent de l'excitation de plasmons volumiques ou surfaciques lors de l'interaction d'ondes lumineuses incidentes avec des motifs métalliques nanométriques. Les couleurs ainsi produites, dites « structurelles », présentent l'avantage par rapport à des couleurs « chimiques » d'être variables en fonction de paramètres d'observation ce qui facilite l'authentification. Par ailleurs, contrairement aux composants optiques de sécurité basés sur des effets purement diffractifs, comme les composants holographiques par exemple, les composants optiques de sécurité à résonance plasmonique ont l'avantage de présenter des effets visuels à l'ordre zéro (réflexion spéculaire ou transmission directe), facilitant encore le contrôle d'authentification.

On s'intéresse plus précisément dans la présente description à des composants optiques de sécurité à résonance plasmonique pouvant être authentifiés en transmission. Le contrôle en transmission est notamment utilisé dans les documents de valeur, par exemple les billets de banque présentant à cette fin une zone évidée et/ou partiellement transparente ou diffusante ou les passeports à fenêtre présentant des informations sur les deux faces. Le composant optique de sécurité peut alors se présenter par exemple sous forme d'un fil de sécurité, d'une piste de sécurité, ou d'un « patch », destiné à être fixé sur le pourtour d'une ouverture ou intégré dans l'épaisseur d'un document ou d'une carte.

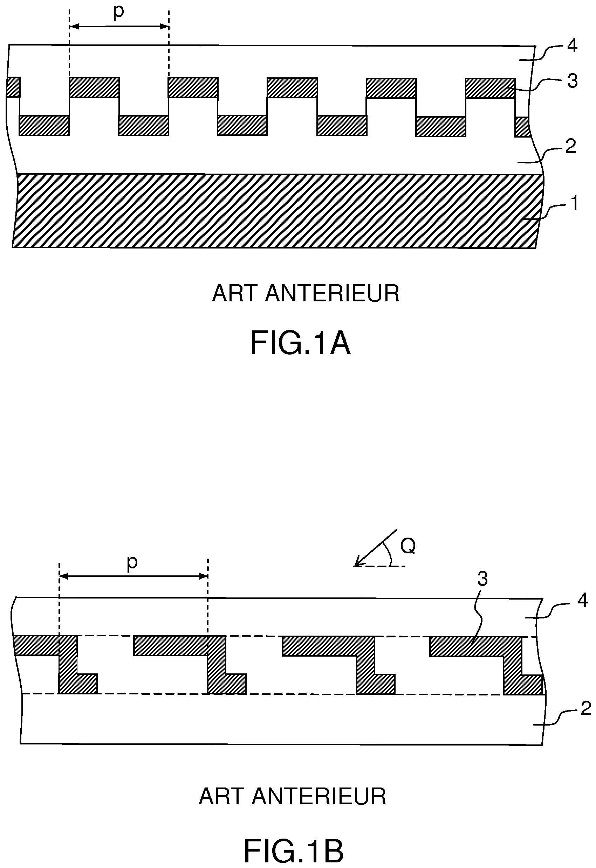

Des composants optiques de sécurité à résonance plasmonique observables en transmission sont décrits par exemple dans la demande de brevet US2010/0307705. Plus précisément, les FIGS 1A et 1B illustrent deux exemples de composants à résonance plasmonique décrits dans la demande de brevet précitée. Le composant optique de sécurité représenté sur la FIG. 1A comprend, sur un substrat transparent 1, une structure métallique 3 formant un motif périodique de période sub longueur d'onde p, à profil rectangulaire, intégré entre une couche d'un vernis d'estampage 2 et une couche d'un vernis de protection 4. La structure métallique est obtenue par évaporation d'une fine couche de métal sur la couche 2 après estampage. En faisant varier l'angle Q d'évaporation du métal, on peut obtenir comme cela est représenté sur la FIG. 1B un réseau sub longueur d'onde présentant un profil asymétrique. Les caractéristiques spectrales en transmission et en réflexion du composant à résonance plasmonique ainsi obtenu dépendent de l'angle d'évaporation du métal, ce qui permet de concevoir des composants optiques de sécurité présentant des effets colorés distincts en transmission et en réflexion.

Les composants optiques de sécurité décrits dans le document US2010/0307705 ci-dessus cité, s'ils présentent des effets colorés à la fois en transmission et en réflexion, ne permettent pas cependant d'obtenir des effets à fort contraste en fonction de l'angle d'observation, notamment du fait de la génération de changements chromatiques multiples en fonction de l'angle d'observation. Ces multiples variations rendent leur contrôle peu intuitif et complexe à assimiler. La demande de brevet WO2012/136777 A1 divulgue un composant optique de sécurité à résonance plasmonique qui est visible en transmission.

La présente description présente un composant optique de sécurité à résonance plasmonique, présentant en transmission des effets à très fort contraste en fonction de l'angle d'observation, permettant une authentification facile et fiable y compris à l'oeil nu par un utilisateur non initié.

### Résumé

Selon un premier aspect, la présente description concerne un composant optique de sécurité à résonance plasmonique destiné à être observé en transmission à l'oeil nu dans une bande spectrale d'observation comprise dans la bande spectrale visible. Le composant optique de sécurité comprend au moins un premier ensemble de nano-lamelles métalliques, obliques ou quasi-obliques, parallèles, inclinées selon un angle d'inclinaison compris entre 30° et 80° par rapport au plan du composant, arrangées de façon périodique selon une direction avec une période sub longueur d'onde dans la bande spectrale d'observation. Il comprend également au moins une première et une deuxième couches en matériau diélectrique, transparentes dans la bande spectrale d'observation, le premier ensemble de nano-lamelles étant encapsulé entre les première et deuxième couches en matériau diélectrique. Selon la présente description, le premier ensemble de nano-lamelles métalliques forme une première zone de couplage plasmonique permettant le couplage dans une première plage de longueurs d'onde de résonance d'ondes incidentes d'angles d'incidence compris dans une première plage angulaire d'incidence avec des modes de plasmon supportés par les nano-lamelles métalliques, de telle sorte à former lors de l'observation en transmission du composant un premier motif coloré selon ladite première plage angulaire d'incidence et un motif neutre en couleurs selon une deuxième plage angulaire d'incidence, les première et deuxième plages angulaires d'incidence étant situées de part et d'autre de la normale au plan du composant.

Le composant optique de sécurité vise à présenter des effets visuels contrastés lors de l'observation en transmission, de part et d'autre de la normale au plan du composant : observation d'un premier motif coloré dans la première plage angulaire d'incidence (ou « première plage angulaire d'observation ») qui contraste avec un effet visuel non coloré, ou neutre, dans la deuxième plage angulaire d'incidence (ou « deuxième plage angulaire d'observation »). La première plage angulaire d'observation correspond par exemple à des angles d'incidence compris dans une plage angulaire sensiblement centrée sur la direction normale aux nano-lamelles et la deuxième plage angulaire d'observation correspond par exemple à des angles d'incidence compris dans une plage angulaire sensiblement centrée sur la direction parallèle aux nano-lamelles.

La perception d'un effet « coloré » ou au contraire, « neutre en couleurs», dépend dans une certaine mesure de l'observateur, de la source d'éclairage et de la transmission. En effet, un motif de distribution spectrale donnée et ayant une forte luminosité sera perçu comme plus « blanc » qu'un motif de même distribution spectrale mais qui serait caractérisé par une transmission lumineuse moins importante (le faisant apparaître plus sombre). Au sens de la présente description, un motif est ainsi considéré comme neutre en couleurs, s'il est formé par un composant ayant une transmission dans la bande spectrale d'observation suffisamment élevée pour apparaître clair et à travers lequel une source de lumière blanche sera perçue par l'oeil humain comme étant non colorée. A l'inverse, des effets visuels colorés pourront comprendre également au sens de la présente description des motifs perçus comme « gris » par un observateur.

Selon un ou plusieurs exemples de réalisation, et pour une observation dans la bande spectrale du visible (380 nm à 780 nm), la zone de couplage forme dans la deuxième plage angulaire d'observation un motif neutre en couleurs produisant un spectre lumineux dont la distance au point blanc du nuancier de couleurs CIE de 1931 (éclairage avec une source blanche standard de type D65) est inférieure à 0,08, le composant optique de sécurité présentant en outre une transmission dans la bande spectrale d'observation supérieure à 50%. La zone de couplage forme au contraire dans la première plage angulaire d'observation un motif coloré, c'est-à-dire produisant un spectre lumineux distant de plus de 0,08 par rapport au point blanc du nuancier de couleurs et/ou formé par un composant optique de sécurité présentant une transmission inférieure à 50% dans la bande spectrale d'observation. La distance d'un spectre lumineux de coordonnées x, y sur le nuancier de couleurs CIE 1931 au point dit « point blanc » du nuancier de couleur, défini comme le point de coordonnées [0,33 ; 0,33] sur le nuancier, est définie par la racine carrée de la somme des coordonnées au carré

$$(\sqrt{(x-0.33)^2 + (y-0.33)^2}).$$

Selon un ou plusieurs exemples de réalisation, la zone de couplage plasmonique forme dans la deuxième plage angulaire d'observation un motif neutre en couleurs produisant un spectre lumineux distant de moins de 0,08 par rapport au point blanc du nuancier de couleurs et formé par un composant optique de sécurité présentant une transmission supérieure à 50%, respectivement 60%, respectivement 70%, respectivement 80% dans la bande spectrale d'observation. Une transmission plus importante dans la deuxième plage angulaire d'observation permet d'augmenter encore le contraste entre les première et deuxième plages angulaires d'observation.

Selon un ou plusieurs exemples de réalisation, la zone de couplage plasmonique forme dans la deuxième plage angulaire d'observation un motif neutre en couleurs formé par un composant optique de sécurité présentant une transmission supérieure à 50% dans la bande spectrale d'observation et produisant un spectre lumineux distant de moins de 0,08, respectivement moins de 0,07, respectivement moins de 0,06 par rapport au point blanc du nuancier de couleurs. Une distance au point blanc plus faible permet d'augmenter encore le contraste entre les première et deuxième plages angulaires d'observation. Les plages données ci-dessus pour la transmission et pour la distance au point blanc peuvent être combinées, la combinaison d'une transmission la plus grande avec une distance la plus faible donnant la perception d'un motif le plus neutre qui contraste le plus avec un motif coloré observé dans la première plage angulaire d'observation.

Un tel composant optique de sécurité se distingue ainsi des composants optiques de sécurité de l'art antérieur par un comportement clairement asymétrique en transmission et notamment par la forte coloration de la lumière transmise dans la première plage angulaire d'incidence qui contraste avec la forte transmission et la faible coloration dans la deuxième plage angulaire d'incidence.

La bande spectrale d'authentification d'un composant optique de sécurité est généralement comprise dans une bande spectrale plus large que le visible, s'étendant entre le proche UV et le proche IR, c'est-à-dire entre 240 nm et 1400 nm environ.

Selon un ou plusieurs exemples de réalisation, le composant optique de sécurité peut comprendre un élément adapté à transformer la lumière incidente, par exemple la lumière issue d'une source proche UV (240 - 380 nm), en une lumière visible pour l'observateur, l'élément étant par exemple une couche fluorescente telle qu'une couche d'encre fluorescente sous excitation UV.

Selon un deuxième aspect, la présente description concerne un composant optique de sécurité à résonance plasmonique destiné à être observé en transmission au moyen d'un dispositif d'acquisition, dans une bande spectrale d'observation non visible, par exemple dans une bande spectrale d'observation comprise dans le proche UV (240 - 380 nm) ou une bande spectrale d'observation comprise dans le proche infrarouge (780 - 1400 nm). Dans ce cas, les motifs « coloré » ou « neutre en couleurs » perçus par le dispositif d'acquisition, correspondent à des motifs qui apparaissent « sombre » et « clair » respectivement, le motif sombre étant visible dans la plage angulaire d'incidence pour laquelle le composant absorbe sélectivement dans la plage de longueurs d'onde résonantes et le motif clair, au contraire, étant visible dans la plage angulaire d'incidence pour laquelle le composant transmet sur une grande partie de la plage spectrale d'observation. Autrement dit, le premier ensemble de nano-lamelles métalliques forme une première zone de couplage plasmonique permettant le couplage dans une première plage de longueurs d'onde de résonance d'ondes incidentes d'angles d'incidence compris dans une première plage angulaire d'incidence avec des modes de plasmon supportés par les nano-lamelles métalliques, de telle sorte à former lors de l'observation en transmission du composant un premier motif sombre selon ladite première plage angulaire d'incidence et un motif clair selon une deuxième plage angulaire d'incidence, les première et deuxième plages angulaires d'incidence étant situées de part et d'autre de la normale au plan du composant.

Selon un ou plusieurs exemples de réalisation, le motif clair présente une transmission dans la bande spectrale d'observation supérieure à 50%, respectivement 60%, respectivement 70%, respectivement 80% et le motif sombre présente une transmission dans la bande spectrale d'observation inférieure à 50%, respectivement 40%, respectivement 30%, respectivement 20%. Le motif sombre est caractérisé par ailleurs par une répartition spectrale donnée résultant de la plage sélective d'absorption en longueurs d'onde. Avantageusement, on recherchera un contraste suffisant entre les motifs clair et sombre, par exemple un écart de 20% au moins en transmission, avantageusement au moins 30%.

Ces effets visuels remarquables dans le visible ou dans une autre bande spectrale d'observation sont obtenus par l'agencement de nano-lamelles métalliques obliques ou quasi-obliques, parallèles et inclinées selon un angle d'inclinaison compris en 30° et 80°.

Pour un couplage efficace avec les modes plasmoniques, quelle que soit la bande spectrale d'observation, les déposants ont montré qu'un ensemble de nano-lamelles pouvait comprendre au moins 5 nano-lamelles, avantageusement au moins 8 nano-lamelles. Il est intéressant pour obtenir un effet visuel bien défini pour un motif donné que ce motif soit réalisé avec un ensemble de nano-lamelles de dimension oblique et d'angle d'inclinaison identiques ou quasi-identiques, réalisant une surface homogène et uniforme.

Par quasi obliques, on comprend que suite à des défauts de fabrication et à des limitations technologiques de fabrication, les nano-lamelles métalliques peuvent présenter des arrondis à leurs extrémités supérieures et/ou inférieures dont les dimensions (cumulées sur les extrémités inférieure et supérieure) sont inférieures à 60 nm, avantageusement inférieures à 50 nm, encore plus avantageusement inférieures à 40 nm, encore plus avantageusement inférieures à 30 nm hors du plan oblique de la nano-lamelle, et / ou inférieures à 20% de la dimension oblique des nano-lamelles, préférentiellement inférieures à 15%, encore plus avantageusement inférieures à 10%, afin de limiter l'impact sur les effets visuels recherchés. La dimension oblique d'une nano-lamelle est également définie comme la petite dimension de la nano-lamelle lorsque la nano-lamelle est de forme sensiblement rectangulaire ou parallélépipédique.

Pour la mise en oeuvre d'un composant optique de sécurité selon la présente description, des défauts de parallélisme et de hauteur ou dimension oblique des nano-lamelles d'un composant optique de sécurité peuvent être tolérés s'ils sont suffisamment faibles pour ne pas impacter fortement l'effet optique, ainsi typiquement des marges de 10%, avantageusement de 8% sur les bornes de l'angle d'inclinaison ou sur le parallélisme sont acceptables.

Une couche est dite transparente dans une bande spectrale au sens de la présente description si au moins 70% de la lumière provenant de ladite bande spectrale est transmise, préférentiellement au moins 80% et plus préférentiellement au moins 90%.

Selon un ou plusieurs exemples de réalisation, la dimension oblique des nano-lamelles, également définie comme la petite dimension de la nano-lamelle lorsque la nano-lamelle est de forme sensiblement rectangulaire ou parallélépipédique est sensiblement égale au rapport entre la période des nano-lamelles et le cosinus de l'angle d'inclinaison des nano-lamelles par rapport au plan du composant optique de sécurité. Cette configuration particulière des nano-lamelles permet notamment de pouvoir former les nano-lamelles par une évaporation verticale de métal sur une première couche en matériau diélectrique structurée, en particulier ayant la forme d'un réseau sub-lambda de profil blazé ou incliné, sans risquer de former des segments métalliques plats entre deux nano-lamelles.

Selon un ou plusieurs exemples de réalisation, le composant optique de sécurité comprend en outre au moins un deuxième ensemble de nano-lamelles métalliques, obliques ou quasi-obliques, parallèles, inclinées entre 30° et 80° par rapport au plan du composant, arrangées de façon périodique avec une période sub longueur d'onde, encapsulé entre les première et deuxième couches en matériau diélectrique. Le deuxième ensemble de nano-lamelles métalliques forme une deuxième zone de couplage plasmonique permettant le couplage dans une deuxième plage de longueurs d'onde de résonance d'ondes incidentes d'angles d'incidence compris dans une troisième plage angulaire d'incidence avec des modes de plasmon supportés par lesdites nano-lamelles métalliques, de telle sorte à former lors de l'observation en transmission du composant un deuxième motif coloré, respectivement sombre (pour les bandes spectrales non visibles), selon ladite troisième plage angulaire d'incidence et un motif neutre, respectivement clair (pour les bandes spectrales non visibles), selon une quatrième plage angulaire d'incidence, les troisième et quatrième plages angulaires d'incidence étant situées de part et d'autre de la normale au plan du composant.

Selon un ou plusieurs exemples de réalisation, les nano-lamelles du deuxième ensemble de nano-lamelles présentent une inclinaison différente de l'inclinaison des nano-lamelles métalliques formant le premier ensemble de nano-lamelles métalliques.

Selon un ou plusieurs exemples de réalisation, les nano-lamelles du deuxième ensemble de nano-lamelles présentent une orientation par rapport à la normale au plan du composant différente de l'orientation des nano-lamelles métalliques formant le premier ensemble de nano-lamelles métalliques.

La réalisation de deux ou plusieurs zones de couplage plasmonique au sein du même composant optique de sécurité permet notamment de créer plusieurs motifs, par exemple des motifs complémentaires.

Selon un ou plusieurs exemples de réalisation, les nano-lamelles des premier et deuxième ensembles de nano-lamelles sont symétriques par rapport à la normale au plan du composant, de telle sorte à ce que le premier ensemble de nano-lamelles métalliques forme lors de l'observation en transmission du composant un premier motif coloré, respectivement sombre, selon une première plage angulaire d'incidence et un motif neutre en couleurs, respectivement clair, selon une deuxième plage angulaire d'incidence et le deuxième ensemble de nano-lamelles métalliques forme lors de l'observation en transmission du composant un deuxième motif coloré, respectivement sombre, selon la deuxième plage angulaire d'incidence et neutre en couleurs, respectivement claire, selon la première plage angulaire d'incidence.

Cet agencement particulier des premier et deuxième ensembles de nano-lamelles permet de former un effet de contraste très fort entre deux zones de couplage plasmonique, qui peuvent ou non former des motifs complémentaires : en fonction de la direction d'observation, lorsqu'une zone de couplage « s'allume » sous forme d'un premier motif l'autre « s'éteint » et inversement en changeant l'angle d'observation par rapport à la normale au plan du composant.

Afin d'optimiser les paramètres de couplage plasmonique dans les bandes spectrales d'observation recherchées, les paramètres suivants pourront être choisis :

- La période d'un ensemble de nano-lamelles est comprise entre 100 nm et 600 nm ;
- la dimension oblique des nano-lamelles est comprise entre 50 nm et 700 nm ;
- la différence des indices de réfraction desdits matériaux diélectriques transparents formant chacune desdites couches est inférieure à 0,1.

Selon un ou plusieurs exemples de réalisation, le composant optique de sécurité comprend d'autres couches selon les besoins requis pour l'application finale ; par exemple le composant optique de sécurité peut comprendre en plus des couches actives pour l'effet plasmonique (couches en matériau diélectrique et nano-lamelles métalliques), un film support portant une desdites couches en matériau diélectrique et/ou un film adhésif disposé sur l'une desdites couches en matériau transparent diélectrique. Ces films sont neutres pour l'effet plasmonique car ils n'altèrent ou n'influencent pas les interfaces diélectrique - métal. Ils permettent de faciliter l'adhésion sur l'objet à sécuriser et/ou la mise en oeuvre de manière industrielle.

Selon un ou plusieurs exemples de réalisation, le composant optique de sécurité comprend en plus de la ou des zones de couplage plasmonique, des zones métalliques planes et/ou d'autres zones métalliques structurées, encapsulées entre les première et deuxième couches en matériau diélectrique, les zones métalliques structurées étant adaptées à former d'autres effets visuels.

Selon un ou plusieurs exemples de réalisation, le composant optique de sécurité comprend au moins deux métaux différents.

Selon un ou plusieurs exemples de réalisation, le composant optique de sécurité comprend des nano-lamelles métalliques comprenant deux métaux.

Selon un ou plusieurs exemples de réalisation, le composant optique de sécurité comprend des nano-lamelles métalliques formées par un empilement métal/diélectrique/métal.

Selon un ou plusieurs exemples de réalisation, le composant optique de sécurité comprend une métallisation partielle, la métallisation partielle pouvant être obtenue par dépôt d'une couche mince de métal uniforme et démetallisation partielle.

Selon un ou plusieurs exemples de réalisation, les première et deuxième couches en matériau diélectrique présentent localement sur une portion d'un ou plusieurs ensemble(s) de nano-lamelles une différence d'indice de réfraction supérieure à 0,1 permettant localement de modifier/annuler l'effet de couplage plasmonique.

Selon un troisième aspect, la présente description concerne un objet sécurisé comprenant un support et un composant optique de sécurité selon le premier aspect ou le deuxième aspect, le composant optique de sécurité étant fixé sur ledit support ou intégré dans le support. Le support peut comprendre une zone évidée ou une zone de transparence dans la bande spectrale d'observation, au niveau de laquelle est agencé ledit composant optique de sécurité, ou une zone diffusante qui permet de rétrodiffuser la lumière et permet une observation de la zone diffusante en transmission à travers le composant optique de sécurité grâce à la lumière rétro diffusée.

L'objet sécurisé est par exemple un document de valeur, tel qu'un billet de banque, un document de voyage (passeports, carte d'identité ou autre document d'identification), une étiquette destinée à l'authentification d'un produit. L'objet sécurisé peut être facilement authentifié par une observation en transmission grâce au composant optique de sécurité à effet plasmonique selon la présente description; par ailleurs, sa résistance à la contrefaçon est élevée du fait de la technologie mise en oeuvre.

Selon un quatrième aspect, la présente description concerne un procédé de fabrication d'un composant optique de sécurité à effet plasmonique selon le premier aspect. Le procédé comprend :

- La formation de ladite première couche en matériau diélectrique transparente, structurée pour former la première zone de couplage ;
- le dépôt d'une couche métallique sur la première couche en matériau diélectrique, formant ainsi le premier ensemble de nano-lamelles métalliques ;
- l'encapsulation de ladite couche métallique par la seconde couche en matériau diélectrique.

Selon un ou plusieurs exemples de réalisation, la couche métallique est obtenue par évaporation de métal, ou par toute autre technique permettant le dépôt de couches minces de métal, selon une direction normale au plan du composant. Une évaporation selon une direction normale au plan du composant permet notamment de limiter à une seule étape l'étape d'évaporation de métal même si le composant comprend plusieurs ensembles de nano-lamelles inclinées selon des angles différents et/ou agencées selon des orientations différentes par rapport à la normale au plan du composant.

**Brève description des figures**

D'autres caractéristiques et avantages de l'invention apparaîtront à la lecture de la description qui suit, illustrée par les figures qui représentent :

FIGS 1A et 1B (déjà décrites), des vues en coupe, partielles, de composants optiques de sécurité à résonance plasmonique selon l'art antérieur ;

FIGS 2A et 2B, des vues en coupe, partielles, d'exemples de composants optiques de sécurité selon la présente description;

FIGS. 3A et 3B des simulations numériques montrant le spectre en transmission et la couleur transmise perçue, en fonction de l'angle d'incidence, pour deux exemples particuliers de composants optiques de sécurité correspondant respectivement aux composants montrés sur les FIGS 2A et 2B ;

FIGS. 4A à 4E, des figures illustrant les effets visuels obtenus avec un exemple d'objet sécurisé équipé d'un composant optique de sécurité selon la présente description, en fonction de l'angle d'observation (rotation autour de l'axe y et rotation autour de l'axe x) ;

FIGS. 5A à 5F, des figures illustrant les effets visuels obtenus avec l'exemple d'objet sécurisé représenté sur les figures 5A à 5F en fonction de l'angle d'observation, lorsque le composant est observé sur le recto ou sur le verso ;

FIG. 6, un schéma de deux zones de couplage plasmonique formées respectivement d'un premier ensemble de nano-lamelles et d'un deuxième ensemble de nano-lamelles, les nano-lamelles du deuxième ensemble de nano-lamelles étant symétriques par rapport aux nano-lamelles du premier ensemble de nano-lamelles par rapport à la normale au plan du composant ;

FIGS. 7A à 7C, des figures illustrant les effets visuels obtenus avec un exemple d'objet sécurisé équipé d'un composant optique de sécurité selon la présente description, en fonction de l'angle d'observation (tilt), le composant comprenant deux zones de couplage plasmonique formant des motifs complémentaires ;

FIGS 8A à 8C, des schémas représentant schématiquement les ensembles de nano-lamelles et la transmision en fonction de l'angle d'observation, dans les exemples des FIGS. 7A à 7C;

FIGS 9A à 9E, des schémas illustrant les étapes d'un exemple de procédé de fabrication d'un composant optique de sécurité selon la présente description;

FIGS 10A et 10B, des vues en coupe, partielles, de deux exemples de composants optiques de sécurité selon la présente description montrant des nano-lamelles quasi-obliques résultant de défauts de procédé de fabrication;

FIGS. 11A et 11B, des simulations numériques montrant le spectre en transmission et la couleur transmise perçue, en fonction de l'angle d'incidence, pour deux exemples particuliers de composants optiques de sécurité correspondant respectivement aux composants montrés sur les FIGS. 10A et 10B ;

FIGS. 12A à 12D des vues en coupe, partielles, d'exemples d'objets sécurisés intégrant un composant optique de sécurité selon la présente description ;

FIG. 13, un schéma montrant les effets de transmission dans un objet sécurisé du type de celui illustré sur la FIG. 12D ;

FIGS. 14A à 14E, des figures illustrant les effets visuels obtenus avec un exemple d'objet sécurisé équipé d'un composant optique de sécurité, du type de celui montré sur la FIG. 12D, en fonction de l'angle d'observation ;

FIG. 15, une représentation du nuancier de couleurs CIE de 1931 obtenue avec une source blanche D65.

Sur les figures, montrées à des fins illustratives, les échelles ne sont pas respectées pour plus de clarté dans la représentation.

**Description détaillée**

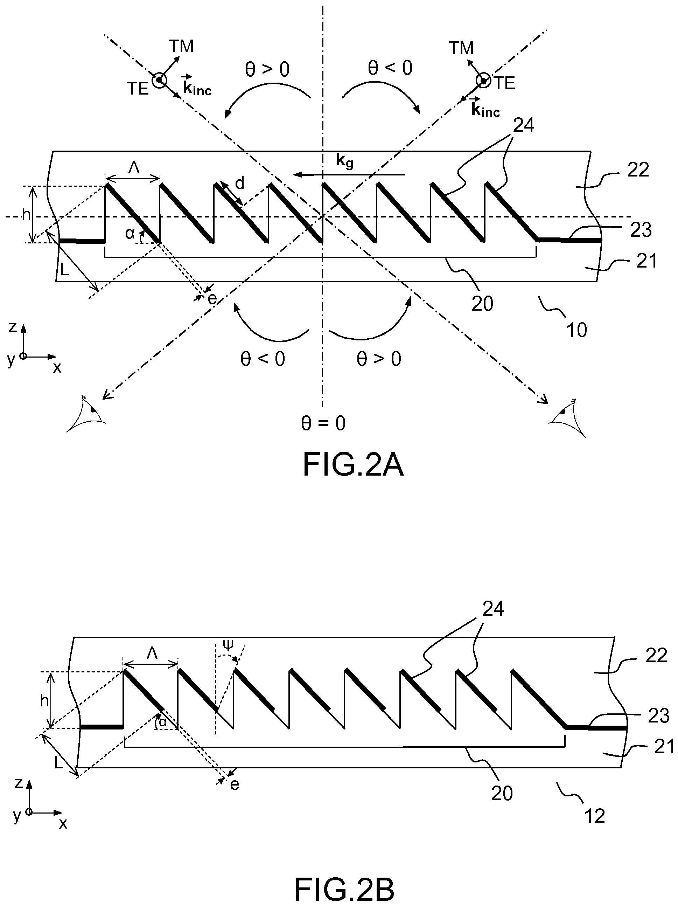

Les FIGS. 2A et 2B représentent des vues en coupe, partielles, de deux exemples de composants optiques de sécurité 10 selon la présente description.

Le composant optique de sécurité selon l'invention comprend généralement au moins un premier ensemble de nano-lamelles métalliques 24, obliques ou quasi-obliques, parallèles, inclinées selon un angle d'inclinaison $\alpha$ compris entre 30° et 80° par rapport au plan du composant, arrangées de façon périodique selon une direction avec une période A, ledit ensemble de nano-lamelles métalliques étant encapsulé entre une première couche en matériau diélectrique 21, transparente, et une deuxième couche en matériau diélectrique 22, transparente, et formant une zone de couplage plasmonique. La zone de couplage plasmonique est au moins localement uniforme et caractérisée par une période sub longueur d'onde A, une longueur oblique L des nano-lamelles, une épaisseur $e$ de la couche métallique dans la direction normale à la longueur L de chaque nano-lamelle. La longueur oblique L des nano-lamelles peut également être définie comme la plus petite dimension de la nano-lamelle assimilée à un rectangle ou à un parallélogramme.

Dans l'exemple du composant représenté sur la FIG. 2A, vue de dessus, il n'y a pas d'espace entre les nano-lamelles et le plan du composant vue de dessus apparaît uniformément métallisé; autrement dit, la longueur oblique L des nano-lamelles est égale au rapport entre la période $\Lambda$ et le cosinus de l'angle d'inclinaison

$$\alpha : L = \frac{\Lambda}{\cos\alpha}.$$ Cette condition est assurée par exemple avec une évaporation métallique verticale, c'est-à-dire selon la normale au plan du composant, sur une couche 21 en matériau diélectrique structurée de telle sorte à former un réseau sub-lambda blazé, c'est-à-dire un réseau à profil triangulaire dont l'une des deux faces planes est substantiellement verticale et donc normale au plan du réseau, et présentant une hauteur h (hauteur du réseau formé sur la couche en matériau diélectrique et mesurée normale au plan du composant).

Dans l'exemple du composant représenté sur la FIG. 2B au contraire, vue de dessus, les nano-lamelles métalliques sont disjointes. Cette configuration résulte par exemple d'une évaporation métallique inclinée selon un angle $\psi$ sur une couche 21 en matériau diélectrique structurée de telle sorte à présenter un profil présentant un ensemble de faces planes et inclinées. Un réseau blazé de hauteur h peut être utilisé comme pour l'exemple de la FIG. 2A mais de nombreux autres profils de réseaux peuvent être utilisés, à condition qu'ils permettent l'obtention d'une nano-lamelle substantiellement oblique. Lors d'une évaporation métallique inclinée, le profil du réseau sub-lambda formé sur la couche en matériau diélectrique peut être mis à profit pour créer une zone d'ombre pour l'évaporation qui va masquer une partie de ce profil pour créer une zone non métallisée (« *self-shadowing structure* » selon l'expression anglo-saxonne), ce qui permet d'ajuster la longueur oblique L des nano-lamelles. La partie du profil non métallisée, après rebouchage de la structure par la deuxième couche en matériau diélectrique, étant optiquement substantiellement homogène, n'impacte pas les propriétés optique du composant optique de sécurité.

Le métal peut être tout métal susceptible de supporter une résonance plasmonique, et de façon préférentielle l'argent, l'aluminium, l'or, le chrome, le cuivre ou le nickel. Les matériaux diélectriques peuvent être tout matériau permettant une « association non destructive » avec le métal, c'est-à-dire ne risquant pas de provoquer une réaction physico-chimique, par exemple de type oxydation, qui dégraderait l'effet à contrôler. Les matériaux diélectriques utilisés pour les couches 21, 22 présentent des indices de réfraction sensiblement identiques, typiquement autour de 1,5, la différence des indices étant avantageusement inférieure à 0,1. Par exemple, la couche 21 en matériau diélectrique et d'indice de réfraction $n_1$ est une couche en matériau polymère destinée à l'estampage et la couche 22 est une couche d'encapsulation en matériau diélectrique de type polymère, d'indice de réfraction $n_2$ sensiblement égal à $n_1$. Les couches 21, 22 sont transparentes dans la bande spectrale d'observation.

Il est connu qu'à l'interface entre un matériau conducteur, par exemple un métal, et un matériau diélectrique, peut se propager une onde électromagnétique de surface associée à une oscillation collective d'électrons à la surface, appelée plasmon de surface. Ce phénomène est par exemple décrit dans l'ouvrage de base de Stefan Alexander Maier (« Plasmonics : Fundamentals and Applications », Springer, 2007). Le couplage d'une onde lumineuse incidente à un mode plasmonique peut être obtenu de différentes façons, notamment par la structuration de l'interface pour former un réseau de couplage. Ce principe de base est mis en oeuvre dans le composant de sécurité selon la présente description pour obtenir des effets remarquables en transmission.

On considère une onde incidente de vecteur d'onde **k$_{inc}$** coplanaire avec le vecteur réseau **k$_g$,** le vecteur réseau **k$_g$** étant défini par le vecteur de direction perpendiculaire aux traits du réseau et de norme définie par $k_g = 2\pi/\Lambda$ où $\Lambda$ est le pas du réseau. Par convention le vecteur réseau est orienté dans le sens des lamelles ou du réseau blazé, de leur point bas vers leur point haut. L'onde incidente comprend une composante de polarisation TM et une composante de polarisation TE, symbolisées sur la figure 2A par la direction du champ électrique ; elle est incidente sur le composant 20 avec un angle d'incidence θ par rapport à l'axe x normal au plan du réseau formé par les nano-lamelles 24.

Pour qu'il y ait couplage, c'est-à-dire transfert d'énergie entre l'onde incidente dans un milieu diélectrique de permittivité relative εd et un mode plasmonique, l'onde électromagnétique doit arriver avec une incidence substantiellement normale à une interface métallique/diélectrique.

Ainsi dans l'exemple des FIGS. 2A et 2B, une onde incidente substantiellement parallèle à l'oblique des nano-lamelles (angle d'incidence θ positif dans la couche en matériau diélectrique 22 selon la convention choisie pour le signe de l'angle d'incidence) aura donc un très faible couplage plasmonique avec les interfaces métalliques, garantissant une haute transparence pour une large plage de longueur d'onde. Les longueurs obliques L des nano-lamelles métalliques 24 étant sub longueur d'onde ou de taille comparable aux longueurs d'onde de la bande spectrale d'observation, pour tous les angles d'incidence proche de l'oblique des nano-lamelles, le couplage plasmonique sera également très faible.

En revanche, lorsque l'angle d'incidence de l'onde incidente s'écarte significativement de l'orientation des plans des nano-lamelles métalliques, par exemple de plus de 25°, avantageusement de plus de 30°, avantageusement de plus de 40°, plus avantageusement de plus de 60° et plus avantageusement aux alentours de 90° de l'orientation des plans des nano-lamelles, un couplage plasmonique croissant se produit. En effet, dans ces cas les champs électriques d'une onde incidence pour les deux polarisations TE et TM sont substantiellement parallèles respectivement à la grande longueur et à la petite longueur des nano-lamelles. Les nano-lamelles étant localement longues suivant l'axe des y, en tout cas plus longues que les limites de cohérences spatiale et temporelle des sources de lumière blanche existantes, le couplage de la polarisation TE ne génère pas de mode résonant localisé fort, du fait de la dimension quasi infinie des lamelles sur cette axe. A l'opposé, pour la polarisation TM, le champ électrique d'une onde incidente à un angle négatif est couplé à une structure plasmonique d'une longueur finie L, permettant de fortes résonances locales. Suivant l'angle d'incidence et la longueur d'onde incidente, le champ électrique couplé à la structure plasmonique interfère de manière constructive ou destructive avec le champ électrique dans le diélectrique. Les résonances plasmoniques créés dans chaque nano-lamelles créent des champs électriques résonants entre les différentes nano-lamelles qui sont espacées d'une distance égale à la période du réseau. Pour une onde incidente à la normale des obliques des nano-lamelles métalliques, chaque lamelle est donc un résonateur plasmonique qui est excité avec un déphasage égal à la distance optique ℓ entre deux nano-lamelles, soit ℓ=n*$\Lambda$*sin($\alpha$). Chaque résonateur plasmonique a ses propres fréquences de résonances liées à la dimension oblique L et à l'épaisseur e, au métal utilisé ainsi qu'au diélectrique l'enveloppant. Les nano-lamelles voisines d'un ensemble de nano-lamelles résonnent également entre elles du fait des champs électromagnétiques oscillant autour de chacune des nano-lamelles et de leur proximité immédiate. Chaque nano-lamelle, du fait de son obliquité, présente un décalage par rapport à ses voisines immédiates d'une distance d = cos($\alpha$) * $\Lambda$. Ces trois gammes de résonances peuvent être modifiées en changeant les paramètres géométriques des nano-lamelles et les propriétés du ou des métal les composant ainsi que du ou des diélectrique les enveloppant afin de déterminer le spectre du motif coloré en transmission dans une plage angulaire déterminé.

Ainsi la période du réseau (ou période des nano-lamelles métalliques) $\Lambda$, l'orientation des nano-lamelles, la longueur oblique des nano-lamelles, le métal, l'épaisseur du métal, les matériaux diélectriques seront choisis en fonction de la plage de longueur d'onde de résonance recherchée afin de former le motif coloré avec le spectre lumineux recherché dans la plage angulaire cherchée. L'homme du métier exclura les périodes de réseaux trop larges pour éviter l'ajout ou le parasitage d'ordres de diffraction supérieurs à 0 aux angles d'observation souhaités, ou s'assurera de leur très faible efficacité et donc visibilité.

Différentes simulations ont été effectuées en fonction des différents paramètres du composant pour en mesurer l'influence. Ainsi typiquement, l'épaisseur du métal pourra être choisie entre 10 et 100 nm, en fonction du métal utilisé. La dimension L des nano-lamelles pourra être choisie entre 50 nm et 700 nm, avantageusement entre 50 nm et 500 nm, et la période $\Lambda$ pourra être comprise entre 100 nm et 600 nm, avantageusement entre 120 nm et 350 nm, plus avantageusement entre 140 et 300 nm, la longueur d'onde de résonance plasmonique correspondant au maximum de couplage (et donc au minimum de transmission) augmentant avec la période et avec la dimension oblique L des nano-lamelles.

Par exemple, on peut montrer que pour un effet maximal de couplage lorsque l'on veut utiliser comme métal l'aluminium, il est préférable d'utiliser des périodes situées entre 120 et 300 nm, des épaisseurs de métal entre 10 et 60 nm, des angles de nano-lamelles situées entre 30 et 80° du plan du réseau.

Avec l'aide d'outils de simulations numérique connus de l'homme du métier, tels que décrits plus bas, les paramètres cités ci-dessus pourront être ajustés pour obtenir les effets recherchés.

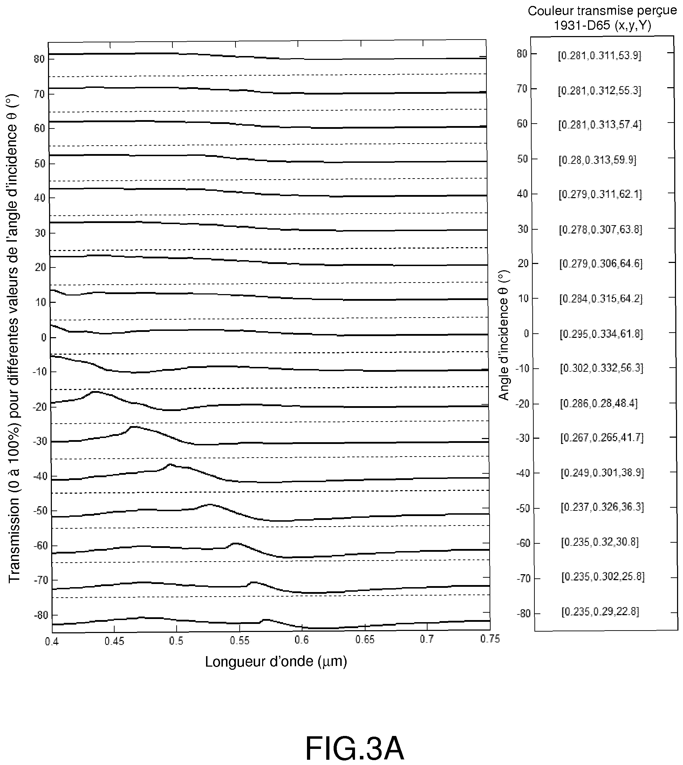

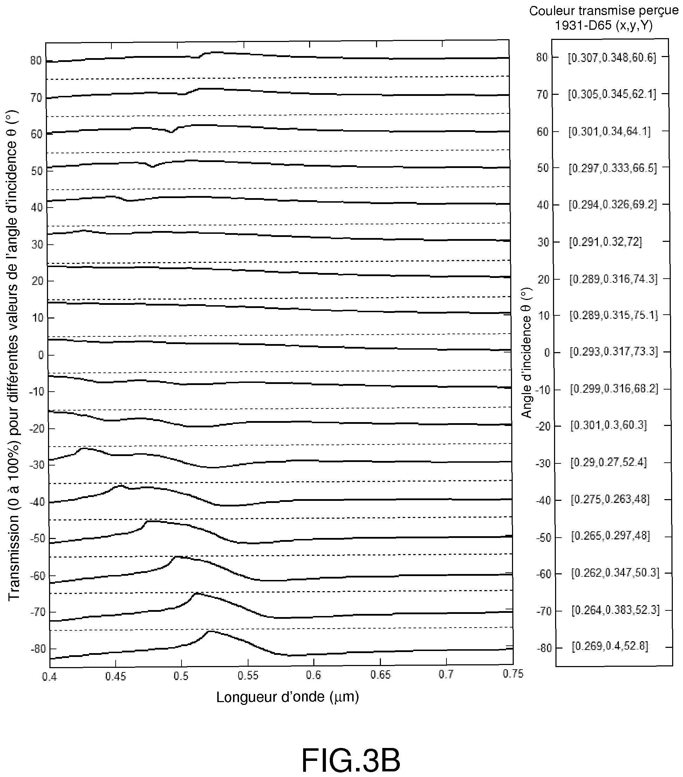

A titre d'exemples, les FIGS. 3A et 3B représentent des résultats de simulations numériques utilisant la méthode dite « Rigorous Coupled Wave Analysis (RCWA) » (« Rigourous coupled wavelength analysis of metallic surface relief grating », M.G.Moharam et al, Journal Of the Optical Society of America, Vol3, Issue 11, pp.1780-1787, 1986) de structures correspondant respectivement aux composants montrés sur les FIGS. 2A et 2B. Les FIGS. 3A et 3B montrent le spectre en transmission et la couleur transmise perçue, en fonction de l'angle d'incidence.

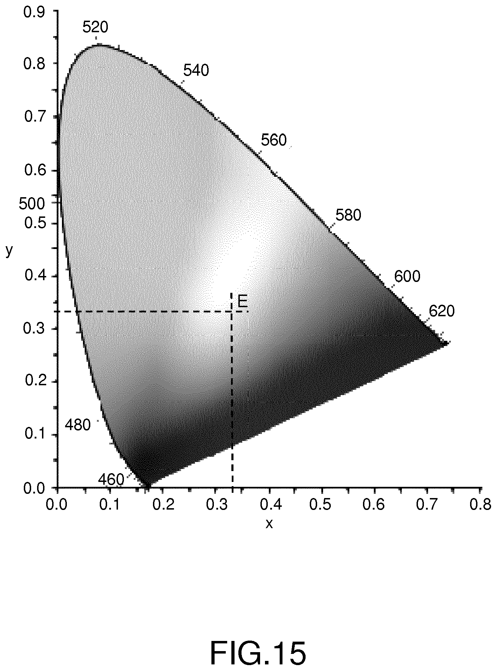

Afin de quantifier de façon simple et reproductible les couleurs que l'on peut percevoir de motifs de composants optiques de sécurité ayant un spectre de transmission particulier, les caractéristiques optiques en transmission sont résumées sous la forme de trois chiffres, les coordonnées chromatiques x et y et de luminosité Y dans le nuancier de couleur de la commission internationale de l'éclairage (CIE) 1931 (ISO 11664-3 :2012 (CIE S014-3/E :2011)) lorsqu'éclairés par une source blanche standard, au nom de la commission internationale de l'éclairage, de type D65 dont une représentation est donnée sur la FIG. 15.

Une source blanche standard, de type D65, produit un spectre lumineux qui est perçue par l'oeil humain comme blanc. Ses coordonnées x et y dans le nuancier de couleur standard CIE de 1931 sont situées à [1/3,1/3], soit environ [0.33, 0.33], appelé point blanc du nuancier de couleur et noté E sur la FIG. 15. Un spectre lumineux blanc, par exemple de type D65, filtré par un composant optique chromatique aura une distribution spectrale d'autant plus colorée, donc d'autant moins neutre en couleur, que la couleur perçue sera éloignée de cette perception de couleur blanche, donc que le spectre transmis aura une chromaticité située sur le nuancier CIE 1931 éloigné du point E [0.33,0.33]. Par exemple, les couleurs parfaitement saturées, correspondant à une lumière quasi-monochromatique, ont les coordonnées [0.17, 0.01] pour le bleu, [0.27, 0.72] pour le vert et [0.73, 0.27] pour le rouge et sont donc toutes distantes du point [0.33, 0.33]. Dans le nuancier de couleur CIE 1931, la distance entre deux points peut généralement être considérée comme la distance géométrique entre ces deux points, soit la racine carrée de la somme des carrés des différences entre leurs coordonnées x et y.

Les spectres lumineux dont les coordonnées chromatiques sont situées dans le nuancier CIE 1931 immédiatement autour du point blanc [0.33, 0.33] garderont ainsi une teinte très blanchâtre. On peut généralement considérer que la zone du nuancier situé à une distance inférieure à 0.02 ou 0.03 du point blanc contient des teintes très blanches. A une distance supérieure à 0.02 ou 0.03 mais inférieure à 0.04 ou 0.05 les teintes seront toujours perçues comme blanches ou blanchâtres, des teintes claires ou pastels seront en général visibles pour des distances supérieures, de l'ordre de 0.06, 0.07 ou 0.08. Dans de bonnes conditions d'éclairages, une couleur située à une distance supérieurs à 0.07 ou 0.08 du point blanc E sera perçue comme colorée et identifiable par un observateur. Une teinte chromatique située à une distance supérieure, de l'ordre de 0.11, 0.12, 0.13 ou plus sera perçue nettement colorée dans des conditions d'éclairage satisfaisantes pour un contrôle de composant optique de sécurité. Cette distance doit être nuancée car une teinte colorée dominante sera perçue plus rapidement en s'éloignant du point blanc, donc lorsque que l'on se déplace vers une couleur primaire (bleu, vert ou rouge) sur le nuancier de couleur CIE 1931 que lorsque l'on se déplace entre ces couleurs primaires, entre les couleur bleue et verte, entre les couleurs verte et rouge ou entre les couleurs rouge et bleue. De plus, la luminosité d'un motif, coloré ou non, impacte sa perception. A titre d'exemple, l'observation d'une source lumineuse blanche à travers un motif très clair, ayant une très bonne transmission, fera observer un motif ayant une forte luminosité, qui sera en général perçu comme plus blanc qu'un motif ayant la même distribution spectrale mais qui serait plus sombre car ayant une transmission lumineuse moins élevée. Les motifs ayant des distributions spectrales plutôt neutres mais des transmissions moins élevées, et donc plus sombres peuvent être qualifiés de motifs gris. A titre d'exemple, une transmission moyenne sur le spectre d'observation supérieur à 80% (T = 0.8) pourra être qualifiée de transmission très élevée, du fait des contraintes d'intégration et des limitations technologiques pour de tels composants. Une transmission moyenne supérieure à 70% restera élevée, sera encore bonne aux dessus de 60% tandis que le composant s'assombrira et sera perçu comme gris pour des transmissions plus basses. A titre d'exemple, un composant optique de sécurité ayant une transmission moyenne de 30 ou 40%, ou plus généralement inférieure à 50% sera clairement perçu comme gris, sombre, ou semi-opaque.

Les FIGS. 3A et 3B représentent les transmissions calculées dans un composant du type de celui des FIGS. 2A et 2B respectivement, en lumière non polarisée, avec un vecteur d'onde coplanaire avec le vecteur réseau, en fonction de l'angle d'incidence dans la couche en matériau diélectrique 22 et de la longueur d'onde incidente $\lambda$. L'angle d'incidence dans le milieu de la couche 22 qui présente un indice supérieur à celui de l'air est plus faible suivant la loi de Snell-Descartes que l'angle d'incidence dans l'air (noté $\theta$ sur les FIGS. 2A, 2B). Pour ces calculs, un algorithme de calcul de propagation d'ondes électromagnétiques et de leur interaction avec des nanostructures est utilisé, par exemple la méthode de RCWA avec une discrétisation fine de la nano-lamelle métallique et de son environnement proche, par exemple disponible dans le logiciel commercial GSolver©, ou la méthode de calcul d'intégrale de surface, la méthode FDTD (Finite Différence Time Domaine) ou FETD (Finite Element Time Domain).

La FIG. 3A représente les spectres en transmission calculées pour un ensemble de nano-lamelles métalliques en Aluminium d'épaisseur $e$ = 23 nm, formées par évaporation de métal sur un réseau de période

$\Lambda$ = 220 nm et de hauteur h = 300 nm, selon une direction normale au plan du réseau. La dimension oblique de la nano-lamelle est d'environ L = 370 nm. Les nano-lamelles sont inclinées de 54°. Les deux matériaux diélectriques d'encapsulation d'indice $n_1$ et $n_2$ sont identiques et sont en polystyrène.

La FIG. 3B représente les spectres en transmission calculées pour un ensemble de nano-lamelles métalliques en Aluminium d'épaisseur *e* = 22 nm, formées par évaporation de métal sur un réseau de période $\Lambda$ = 200 nm et de hauteur h = 400 nm, avec un angle de 25° par rapport à la normale au plan du réseau. La dimension oblique de la nano-lamelle est d'environ L = 230 nm. Les nano-lamelles sont inclinées de 63°. Les deux matériaux diélectriques d'encapsulation d'indice $n_1$ et $n_2$ sont identiques et sont en polystyrène.

Dans l'un et l'autre des cas, on observe une grande neutralité en couleur sur une plage d'angles d'incidence positifs, et une coloration nette sur une plage d'angles d'incidence négatifs.

Ainsi dans l'exemple de la FIG. 3A, il existe un fort contraste entre une première plage angulaire à fort couplage plasmonique, sensiblement comprise entre -40° et -80° (angles pris dans la couche en matériau diélectrique 22) pour laquelle on peut observer un motif coloré (distance supérieure à 0,09, transmission inférieure à 40%) et une deuxième plage angulaire, sensiblement comprise entre 0° et 50°, pour laquelle la teinte observée est neutre (distance inférieure à 0,06 et transmission supérieure ou égale à 60%). Le couplage plasmonique est le plus prononcé lorsque la lumière transmise est incidente à un angle proche de la normale des nano-lamelles. Dans cet exemple, les nano-lamelles sont inclinés à un angle de 54°, l'incidence normale aux nano-lamelles est située à un angle de -54° pour la propagation dans le polystyrène, selon la convention choisie pour le signe de l'angle $\theta$ sur la FIG. 2A. Cette incidence de propagation ne peut pas se propager dans l'air et correspond à une réflexion interne totale, aussi « appelée mode substrat ». Les angles d'incidence dans l'air rasants et négatifs (proche de -90°) sont donc les plus proches d'une incidence normale aux nano-lamelles (dans le polystyrène) et le couplage plasmonique y est le plus fort.

Dans l'exemple de la FIG. 3B, il existe également un contraste entre une première plage angulaire à fort couplage plasmonique, sensiblement comprise entre -40° et -80° pour laquelle on peut observer un motif coloré (distance supérieure à 0,08, transmission autour de 50%) et une deuxième plage angulaire pour les angles compris entre 10° et 80° pour laquelle la distance est inférieure à 0,05 et la transmission supérieure ou égale à 60%.

A noter que ce très faible couplage plasmonique, dans le cas de la neutralité en couleur sur une plage d'angle d'incidence, pour un spectre large et une plage angulaire large n'est pas réalisable pour des structures plasmoniques ayant de multiples faces ayant différentes orientations spatiales. En particulier, les structures plasmoniques de l'art antérieur ayant une orientation spatiale symétrique par rapport à la normale au plan du composant ne permettent pas de contraste fort entre deux plages angulaires.

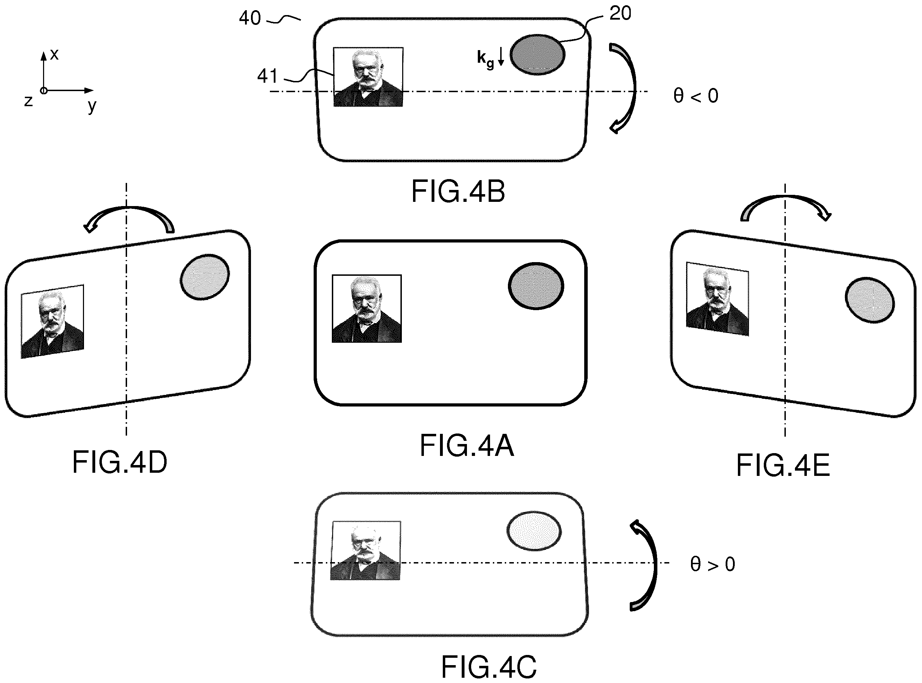

Les FIGS. 4A à 4E présentent un document de sécurité 40, par exemple une carte, comprenant une zone plasmonique 20, pour différents angles d'observation en transmission. Le composant plasmonique 20 est intégré au document de sécurité 40 sur une zone transparente. Ladite carte comprenant entre autres des éléments de personnalisation 41, tel qu'une photo du porteur de la carte. La zone plasmonique 20 présente un vecteur réseau dont la direction est orientée vers le bas de la carte et qui est colinéaire au vecteur x du repère orthonormé représenté. La FIG. 4A présente l'observation d'un composant plasmonique 20 en transmission avec une incidence à la normale au composant, on n'observe dans ce cas aucune coloration ou transparence. La FIG. 4B présente l'observation d'un composant plasmonique 20 en transmission avec une incidence $\theta$<0 par rapport à la normale au composant (rotation autour de l'axe y). Dans ce cas il est possible d'observer une coloration forte ou pastel de la zone plasmonique 20. La FIG. 4C présente l'observation du composant plasmonique 20 en transmission avec un angle d'observation $\theta$>0. Dans ce cas il est possible d'observer une transmission forte et neutre en couleur. Les FIGS. 4D et 4E présentent l'observation du composant plasmonique 20 en transmission pour un angle d'observation $\theta$≈0 mais avec une rotation autour de l'axe x. On observe dans ce cas une transmission proche voir identique à la position initiale de la FIG. 4A. L'avantage est que le composant n'est sensible qu'à un seul et unique mouvement (dans l'exemple des FIGS. 4A à 4E), permettant de faciliter la communication sur le geste de contrôle.

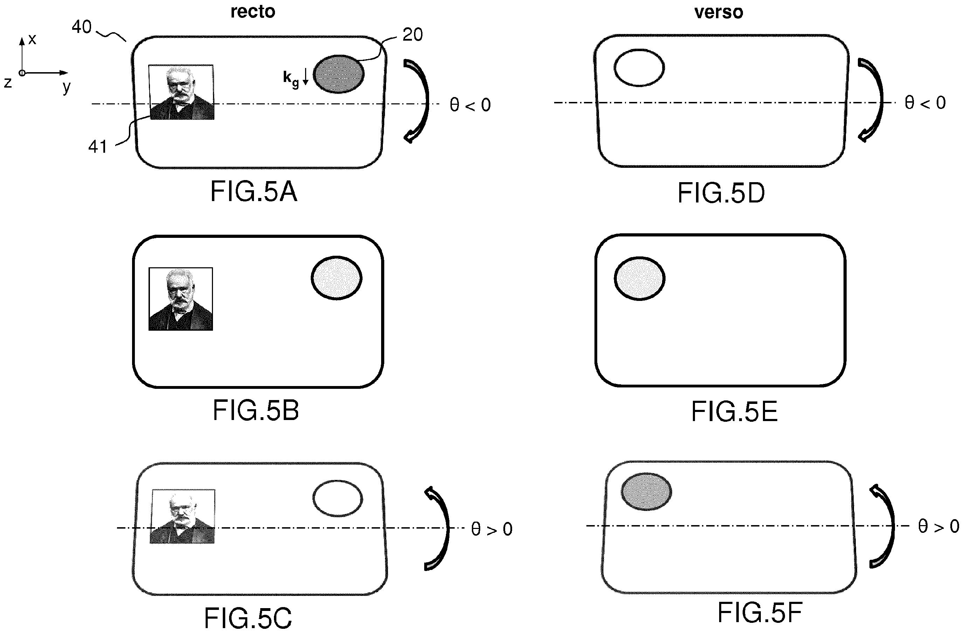

Les FIGS. 5A à 5F présentent le même document de sécurité 40 et la même zone plasmonique 20 que les FIGS. 4A à 4E. En revanche on présente ici un effet remarquable d'inversion d'effet entre le recto et le verso du document de sécurité. Les FIGS. 5B et 5E présentent l'observation du document de sécurité 40 en recto, respectivement en verso. L'angle d'observation $\theta$≈0 ne permet pas d'observation différenciée entre le recto et le verso. La FIG. 5A et la FIG. 5D présentent le même document de sécurité 40 respectivement en recto et en verso. Pour la FIG. 5A l'angle d'observation $\theta$ < 0 permet l'observation d'une coloration en transmission de la zone plasmonique 20, comme dans le cas de la FIG. 4B. En effet, l'angle d'observation $\theta$ < 0 correspond à des angles d'incidence sensiblement perpendiculaires aux nano-lamelles. Pour la FIG. 5D, qui correspond au verso de la FIG. 5A, on observe une transmission neutre en couleur. En effet l'angle d'observation $\theta$ < 0 correspond alors à des angles d'incidence sensiblement parallèles aux nano-lamelles. La FIG. 5C et la FIG. 5F présentent le même document de sécurité en recto, respectivement en verso. Pour la FIG. 5C l'angle d'observation $\theta$ > 0 permet l'observation d'une transmission neutre en couleur de la zone plasmonique 20. Pour la FIG. 5F, qui correspond au verso de la FIG. 5C, on observe au contraire une transmission colorée. En effet, l'angle d'observation θ > 0 correspond alors à des angles d'incidence sensiblement perpendiculaires aux nano-lamelles.

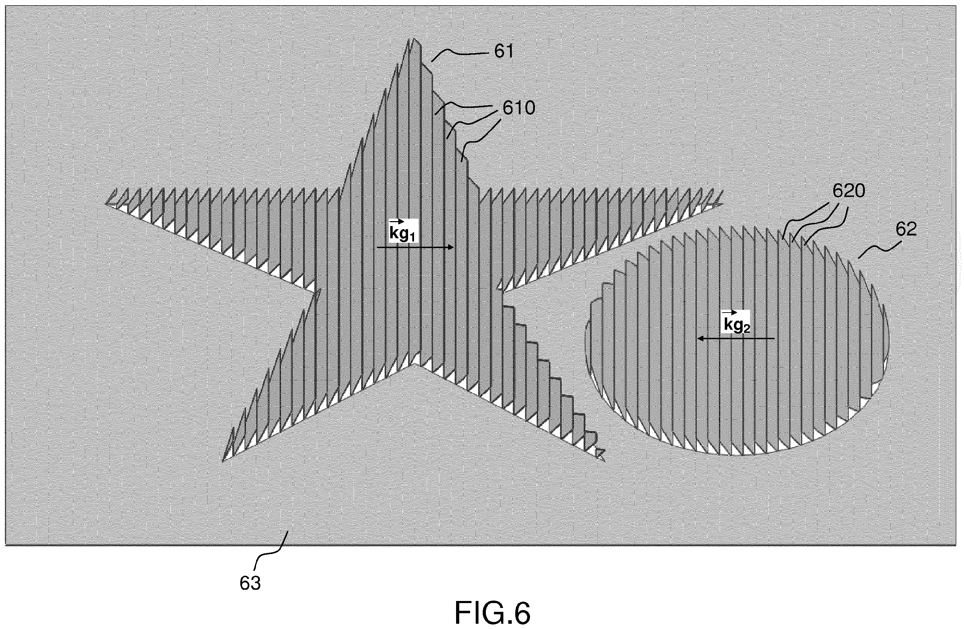

L'effet sera d'autant plus visible dans le cas d'un composant optique de sécurité comprenant deux zones de couplage plasmonique formant chacune un motif, tel que représenté par exemple sur la FIG. 6.

Sur cette figure, le composant optique de sécurité comprend deux zones de couplage distinctes 61, 62 formant respectivement une étoile et un rond, et un fond métallisé uniforme 63. Les deux zones de couplage 61, 62 sont formées chacune d'un ensemble de nano-lamelles métalliques agencées de façon homogène et uniforme, respectivement 610, 620. Les ensembles de nano-lamelles 610 et 620 présentent des vecteurs réseaux $k_{g1}$ et $k_{g2}$, parallèles mais de sens opposés. En utilisant des réseaux blasés estampés ou moulés avec des orientations opposées sur un substrat et en effectuant une métallisation à la normale du plan du composant, les deux zones et le fond métallisé peuvent être fabriqués simultanément.

Un tel composant optique de sécurité permet d'observer l'apparition du motif « étoile » dans une première plage angulaire d'observation, le rond étant neutre en couleurs, tandis qu'inversement, dans une deuxième plage angulaire d'observation, le motif « étoile » s'éteint tandis qu'apparaît de façon coloré le motif « rond ».

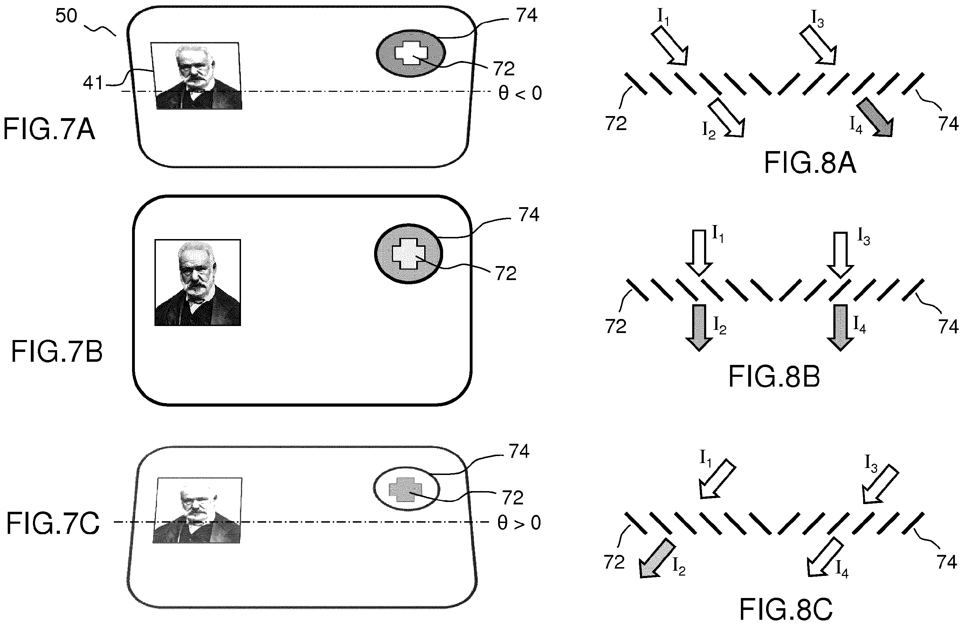

Avantageusement, on pourra donner aux zones 61, 62 de la figure 6 des formes complémentaires et caractéristiques, comme cela est illustré par exemple sur les FIGS. 7 et 8.

Les FIGS. 7A à 7C présentent à nouveau un document de sécurité 50 mais avec un composant de sécurité comprenant deux zones de couplage plasmonique 74 et 72. Chacune des deux zones présente des nano-lamelles identiques (pas A, dimension oblique de la nano-lamelle L, angle a) mais dont les vecteurs réseaux sont de sens opposés.

Les FIGS. 8A à 8C illustrent pour chacune des FIGS. 7A à 7C la transmission en fonction de l'angle d'incidence au niveau des zones de couplage plasmonique.

Dans le cas de la FIG. 7B, l'angle d'observation θ ≈ 0 ne permet pas de différencier en transmission les deux zones 72 et 74. En effet et comme représenté sur la FIG. 8B les faisceaux $I_1$ et $I_3$, en lumière blanche (380 nm à 780 nm), ont un angle d'incidence identique sur les nano-lamelles de la zone plasmonique 72 et de la zone plasmonique 74. Le résultat est une transmission neutre en couleur et faible sur chacune des deux zones sans possibilité de différenciation.

Dans le cas de la FIG. 7A, l'angle d'observation θ < 0 correspond à une incidence sensiblement parallèle aux nano-lamelles de la zone de couplage plasmonique 72 ou autour de la direction parallèle, et sensiblement perpendiculaire aux nano-lamelles de la zone de couplage plasmonique 74, ou autour de la direction perpendiculaire. La transmission est alors sensiblement différente entre la zone 72 et la zone 74. Sur la FIG. 8A sont représentés schématiquement deux faisceaux identiques de lumière blanche incidents sur la zone plasmonique 74 et la zone plasmonique 72. Sur la zone 72, le faisceau est sensiblement parallèle aux nano-lamelles, et on observe une transmission forte et neutre en couleur. Sur la zone 74, le faisceau est sensiblement perpendiculaire aux nano-lamelles, la transmission est alors colorée.

Dans le cas de la FIG. 7C, l'angle d'observation est inversé. Ainsi l'angle d'observation θ > 0 correspond à une incidence sensiblement parallèle aux nano-lamelles de la zone de couplage plasmonique 74 ou autour de la direction parallèle, et sensiblement perpendiculaire aux nano-lamelles de la zone de couplage plasmonique 72, ou autour de la direction perpendiculaire. La transmission est alors sensiblement différente entre la zone 72 et la zone 74. Sur la FIG. 8C sont représentés schématiquement deux faisceaux identiques de lumière blanche incidents sur la zone plasmonique 74 et la zone plasmonique 72. Sur la zone 74, le faisceau est sensiblement parallèle aux nano-lamelles, et on observe une transmission forte et neutre en couleur. Sur la zone 72, le faisceau est sensiblement perpendiculaire aux nano-lamelles, la transmission est alors colorée.

Les déposants ont également mis en évidence que deux zones de couplage plasmonique, présentant des caractéristiques similaires mais ayant des vecteurs réseaux présentant un angle de 90° l'un par rapport à l'autre pouvait présenter un intérêt pour le contrôle d'un document de sécurité en transmission. Ainsi une première zone plasmonique serait sensible uniquement à une rotation suivant l'axe x, et l'autre zone serait quant à elle sensible uniquement en rotation suivant l'axe y.

La bande spectrale d'observation peut être comprise dans le visible pour une observation à l'oeil nu; L'éclairage du composant peut se faire en lumière naturelle ou au moyen d'une source d'éclairage blanche par exemple.

Cependant, il est courant de vérifier les composants optiques de sécurité avec une source d'éclairage spécifique, en particulier ultraviolette ou dans l'infrarouge proche (254nm, 365nm, 850-860nm, 940nm etc...).

Selon un ou plusieurs exemples de réalisation, dans le cas notamment d'un éclairage proche UV, une couche fluorescente telle qu'une couche comportant des pigments ou colorants fluorescents sous excitation UV ou autre forme fluorescente peut être située dans le composant optique de sécurité en amont des zones de couplage plasmonique par rapport à l'éclairage incident, les zones de couplage plasmonique étant adaptées à une bande d'observation visible, la couche fluorescente dans ce cas transforme la lumière incidente proche UV en lumière visible.

Selon un ou plusieurs autres exemples de réalisation, dans le cas notamment d'un éclairage proche UV, une couche fluorescente ou autre forme fluorescente peut être située dans le composant optique de sécurité en aval des zones de couplage plasmonique par rapport à l'éclairage incident. Les zones de couplage plasmonique sont adaptées à la bande spectrale d'observation dans l'UV. Lors d'un contrôle optique une lampe ultraviolette est utilisée pour éclairer à travers un ou des motifs de nano-lamelles cette forme fluorescente. Les nano-lamelles peuvent être optimisées pour permettre une bonne transparence pour l'éclairage ultraviolet sur une large plage angulaire, par leur géométrie ou le choix du métal. La lumière fluorescente réémise est filtrée par le ou les motifs de nano-lamelles créant une dépendance angulaire asymétrique pour la visualisation de cette forme fluorescente, qui est visible à l'oeil nu ou par un système de vision.

Selon un ou plusieurs autres exemples de réalisation, la source d'éclairage n'est pas nécessairement perçue par l'oeil humain (proche UV ou proche IR) mais elle peut être observée par un système d'acquisition d'images. Les zones de couplage plasmonique sont ainsi adaptées à la bande spectrale d'observation considérée dans le proche UV ou le proche IR de telle sorte à permettre l'observation d'un motif sombre dans la première plage angulaire et une plage claire dans la deuxième bande angulaire d'observation.

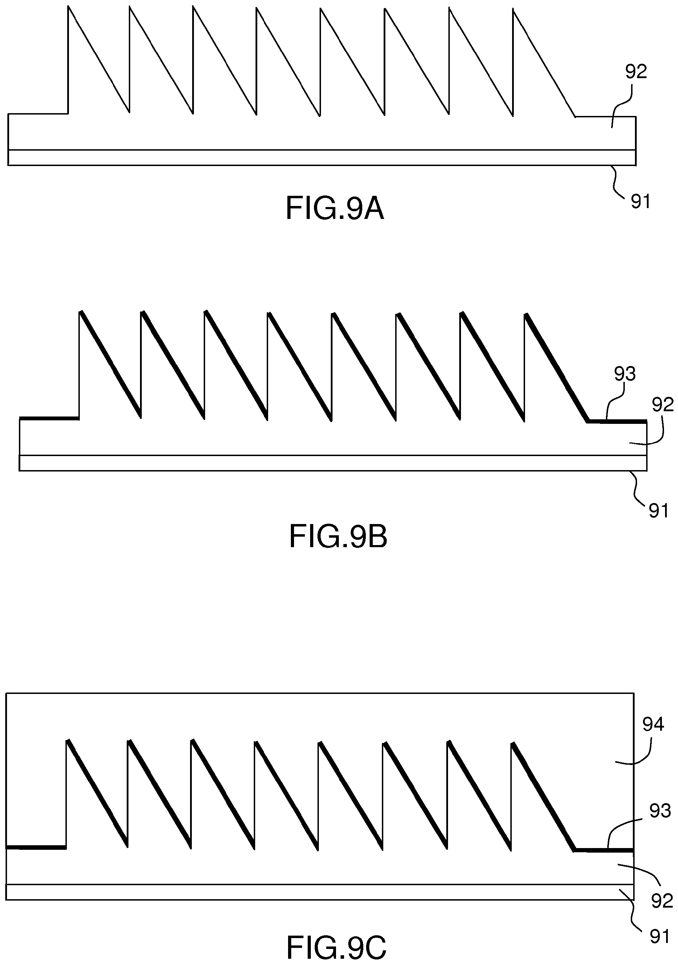

Les composants de sécurité tels que décrits précédemment peuvent être réalisés comme cela est décrit au moyen des FIG. 9A - 9F.

Les structures optiques des différentes zones sont préalablement enregistrées par photolithographie ou lithographie par faisceau d'électrons sur un support photosensible ou « photoresist » selon l'expression anglo-saxonne pour former un réseau, par exemple un réseau blazé ou incliné, dont le profil peut éventuellement être modifié selon différentes étapes combinant une évaporation angulaire d'une couche de protection sur le réseau et une gravure sèche directionnelle à un ou des angles spécifiques. Une étape de galvanoplastie permet de reporter ces structures optiques dans un matériau résistant par exemple à base de Nickel pour réaliser la matrice ou « master », voir par exemple l'ouvrage de référence « diffraction handbook grating » et plus particulièrement le chapitre 5 « Replicated Grating » (Christopher Plamer, Sixième édition, Newport 2006).

Un estampage (ou « embossage ») peut ensuite être réalisé à partir de la matrice ainsi réalisée pour former une couche en matériau diélectrique structurée (FIG. 9A). Typiquement, la couche en matériau diélectrique 92 est un vernis d'estampage de quelques microns d'épaisseur porté par un film 91 de 5 $\mu$m à 50 $\mu$m en matériau polymère, par exemple en PET (polyéthylène téréphtalate). L'estampage peut être fait par pressage à chaud du matériau diélectrique (« hot embossing ») ou par moulage et réticulation UV (« UV casting »). L'indice de réfraction de la couche formée du vernis d'estampage est typiquement proche de 1,5 pour la lumière visible.

Vient ensuite le dépôt d'une couche métallique 93 (FIG.9B) de la couche ainsi estampée ou moulée. Le dépôt de la couche métallique peut être fait par évaporation métallique selon une direction verticale au plan du composant ou avec un angle d'inclinaison, selon la géométrique que l'on veut donner aux nano-lamelles métalliques. La métallisation est faite sous vide, de façon parfaitement contrôlée en épaisseur, avec au moins l'un par exemple des métaux suivants : argent, aluminium, or, chrome, cuivre, nickel etc.

Une couche de fermeture 94 d'indice de réfraction contrôlé est ensuite appliquée, par exemple par un procédé d'enduction (FIG. 9C). Pour certaines applications, telles que les produits de laminage ou de marquage à chaud, cette couche peut être la couche adhésive. La couche de fermeture, qui forme la couche en matériau diélectrique 22 (FIG. 2A) présente un indice de réfraction sensiblement identique à celui de la couche estampée 92, qui forme la première couche en matériau diélectrique 21 (FIG. 2A), autour de 1,5, et présente une épaisseur supérieure ou égale à un micron, par exemple de quelques microns. Selon la destination finale du produit, un adhésif peut être appliqué sur la couche de fermeture. On obtient ainsi l'ensemble des nano-lamelles métalliques encapsulées entre les deux couches en matériau diélectrique.

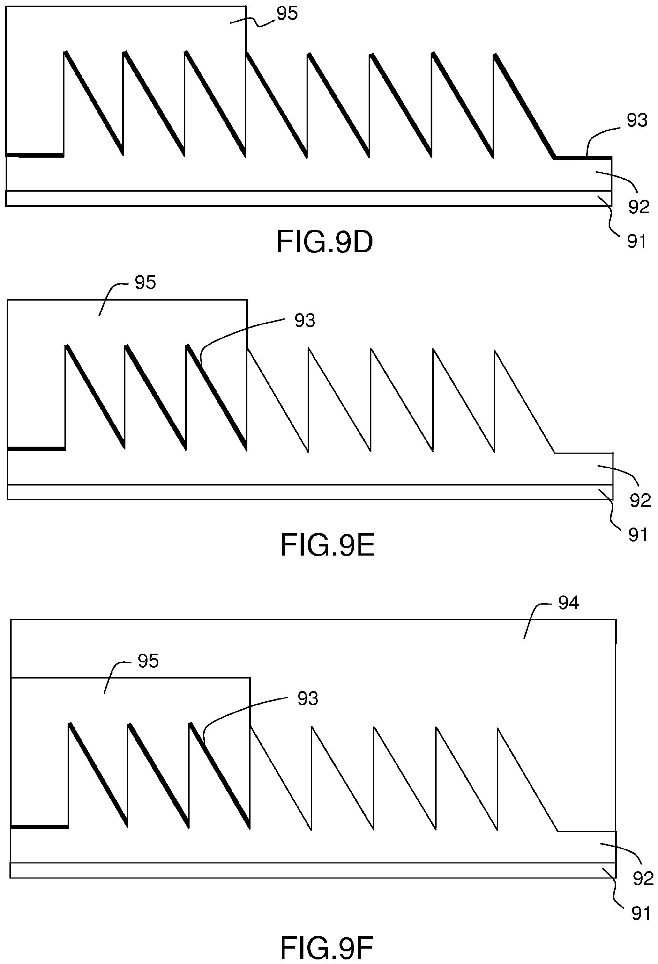

Selon un ou plusieurs exemples de réalisation, il est possible de démétalliser partiellement la couche métallique 93 pour la réalisation de motifs spécifique ou afin de facilité la lisibilité de l'effet. Pour cela, un premier procédé de démetallisation partielle consiste à appliquer un vernis 95 de protection sur les zones où l'on souhaite que la couche métallique soit préservée (FIG.9D). Ce vernis 95 présente un indice de réfraction sensiblement identique à celui de la couche estampée ou réticulée à l'UV 92, autour de 1.5, avec une épaisseur de l'ordre du micron. Par la suite une étape de bain chimique permet de détruire les parties métalliques non protégées (FIG.9E). Enfin la couche de fermeture 94 est appliquée sur l'ensemble du composant (FIG. 9F), la couche de fermeture présentant un indice de réfraction sensiblement identique à celui de la couche estampée 92.

Un autre procédé de démétallisation partielle consiste à appliquer avec un motif donné une encre soluble sur la couche estampée ou réticulée à l'UV. Lors du dépôt du métal, celui-ci est appliqué uniformément sur la couche mais ne subsiste que sur les zones où ne se trouve pas l'encre lorsque l'encre est retirée. Une couche de fermeture est alors appliquée présentant un indice de réfraction sensiblement identique à la couche estampée.

La démétallisation, qu'elle soit faite selon l'un ou l'autre des procédés décrits, peut être suivie de l'application d'un deuxième métal localement. Pour ce faire une première étape de démetallisation est réalisée par exemple par le premier procédé décrit mais la couche de fermeture n'est pas appliquée. On se retrouve dans le cas de la FIG. 9E. Une couche du deuxième métal est alors déposée avant l'encapsulation avec la couche 94 en matériau diélectrique. Dans le deuxième procédé le premier métal est présent localement sans couche de protection. Pour l'application d'un deuxième métal, un des deux procédés de démetallisation est à nouveau appliqué. Il est possible lors de l'application du deuxième métal que les couches métalliques se superposent localement, formant des zones de plus grande densité optique, ou au contraire qu'il en résulte des zones non métallisées qui, une fois rebouchées par la couche de fermeture, formeront des zones transparentes dans le composant.

Selon une variante, les zones métalliques différentes peuvent correspondre à des zones de couplage plasmonique différentes. Autrement dit, le premier métal est appliqué sur une ou plusieurs première(s) zone(s) de couplage plasmonique, tandis que le deuxième métal est appliqué sur une ou plusieurs autre(s) deuxième(s) zones de couplage plasmonique, permettant dans les différentes zones de couplage des effets colorés distincts. Alternativement, les différents métaux peuvent être déposés selon des zones qui ne correspondent pas aux zones de couplage plasmonique, par exemple sur des nano-lamelles d'une même zone de couplage plasmonique ou même, les nano-lamelles peuvent comprendre différents métaux.

Avantageusement, les zones plus opaques qui nécessitent au moins 2 métallisations ou au contraire, plus transparentes qui peuvent exister dès la première démétallisation partielle, pourront être exploitées pour former des éléments graphiques de séparation entre les zones formées des différents métaux. Ces éléments seront utilisés par l'homme du métier pour renforcer la force du graphique en donnant une meilleure lisibilité pour la personne en charge du contrôle.

Selon un ou plusieurs exemples de réalisation, il est possible avant ou après l'étape de métallisation d'appliquer un ou plusieurs matériaux diélectriques pour rechercher des effets visuels différents. Pour cela on pourra par exemple appliquer une encre soluble sur la couche estampée ou réticulée à l'UV. Un premier dépôt de couche mince permet d'appliquer uniformément un matériau diélectrique sur l'ensemble de la couche estampée et sur l'encre ; le matériau diélectrique ne subsiste que sur les zones où ne se trouve pas l'encre lorsque l'encre est retirée. Ensuite une étape de métallisation, pouvant être sélective, est réalisée. Si la métallisation est sélective, elle comprendra également une étape d'impression préalable d'encre soluble permettant de sélectionner les zones d'application du métal. Il est possible lors de l'application du métal que la couche métallique se superpose localement avec la couche diélectrique, formant alors des zones ou le couplage plasmonique sera modifié, altéré ou annulé.

Selon un ou plusieurs exemples de réalisation, le composant optique de sécurité comprend des nano-lamelles métalliques formé par un empilement métal/diélectrique/métal.

Comme cela apparaît au vue de l'exemple de méthode de fabrication décrite ci-dessus, l'inclusion d'un composant optique de sécurité selon l'invention dans un document sécurisé est parfaitement compatible avec la présence dans le même document de structures à base de réseaux habituellement utilisées pour la réalisation de composants holographiques.

Notamment, il sera possible de réaliser un composant optique de sécurité comprenant un ou plusieurs composants de type plasmonique tels que décrits précédemment et un ou plusieurs autres type de composants optiques de sécurité, par exemple de type holographique.

Pour cela une matrice est réalisée par enregistrement des différents motifs correspondants aux différents composants optiques de sécurité sur le support photoresist puis comme précédemment une étape de galvanoplastie permet de transférer la structure optique de la photoresist à un support solide pour former la matrice. L'estampage peut ensuite être réalisé à partir de la matrice pour transférer les différentes microstructures sur le film en matériau polymère. La métallisation dont l'épaisseur doit être contrôlée pour les composants à effet plasmonique peut être faite sur l'ensemble du film, car elle ne gêne pas les autres composants de type DOVID fonctionnant en réflexion, d'autant plus si elle est effectuée par une évaporation métallique selon une direction normale au plan du composant.

Du fait de limitations de la fidélité de réplication de nanostructures et des limites technologiques d'origination de structures réseaux, par exemple de type nanoblazé, le réseau estampé ou moulé servant de support à l'évaporation métallique peut avoir des extrémités imparfaites et en particulier arrondies.

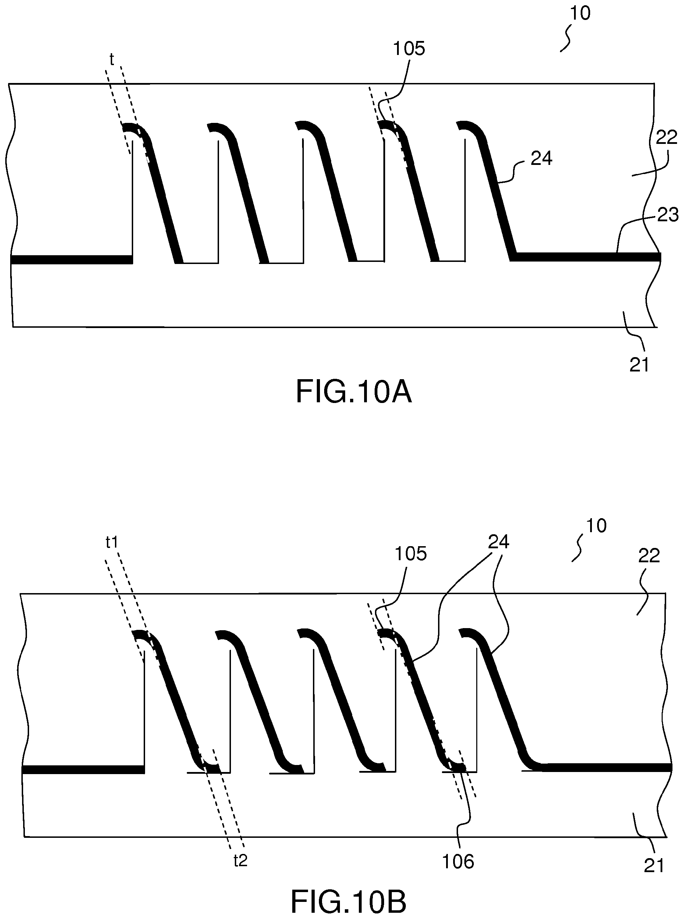

Les FIGS 10A et 10B représentent des vues en coupe, partielles, de deux exemples de composants optiques de sécurité selon la présente description montrant des nano-lamelles quasi-obliques 24 qui résultent de défauts de procédé de fabrication. Les nano-lamelles métalliques peuvent subir une déformation, par exemple au sommet de la structure (105, FIG. 10A), ou au sommet et au pied de la nano-lamelle (105, 106 FIG. 10B). Il est à noter que les sommets et pieds, haut et bas, des nano-lamelles peuvent être inversés au cours des étapes de fabrication et entre l'estampage ou moulage du réseau sub-lambda et le composant optique de sécurité. Cette déformation peut donc également apparaître uniquement au pied, bas de la nano-lamelle, ou aux deux extrémités dans des proportions différentes.

Les défauts de fabrication représentés par exemple sur les FIG. 10A et 10B peuvent altérer l'effet optique recherché. Cependant, les déposants ont montré que si les arrondis sur les angles de réseaux, notés respectivement $t_1$ et $t_2$ sur les FIGS. 10A et 10B, sont inférieurs (en cumulé) à 20%, préférentiellement inférieures à 15%, encore plus avantageusement inférieures à 10% de la dimension oblique L, soit par exemple inférieurs à 60 nm, avantageusement inférieurs à 50 nm, encore plus avantageusement inférieurs à 40 nm, encore plus avantageusement inférieurs à 30 nm hors du plan oblique de la nano-lamelle pour une nano-lamelle de dimension oblique environ égale à 330 nm, l'impact sur l'effet optique sera généralement limité et l'effet optique recherché encore identifiable. En revanche, les déposants ont montré que des défauts de l'ordre de 70 nm, en particulier de plus de 80 nm et d'autant plus supérieurs à 90 nm hors du plan de la dimension oblique de la nano-lamelle affectent de façon critique l'effet optique recherché.

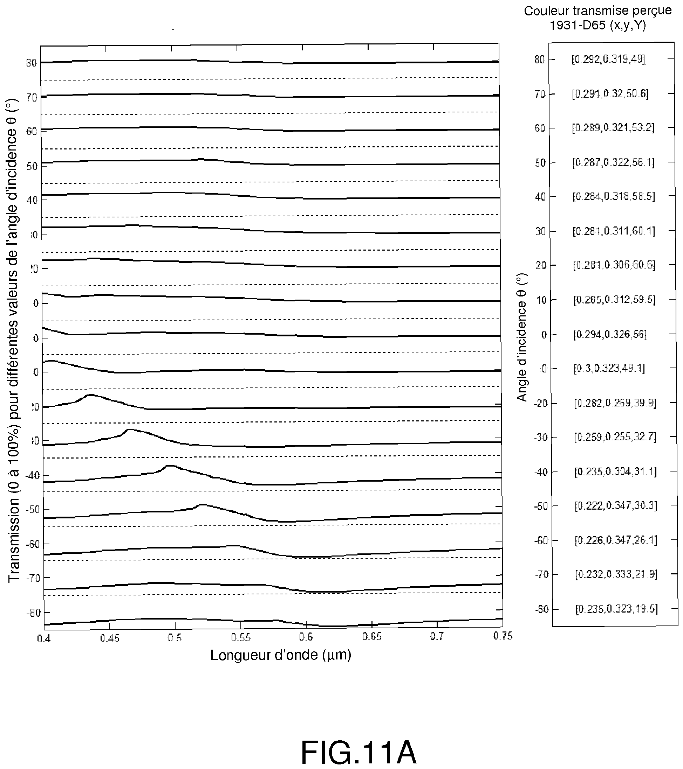

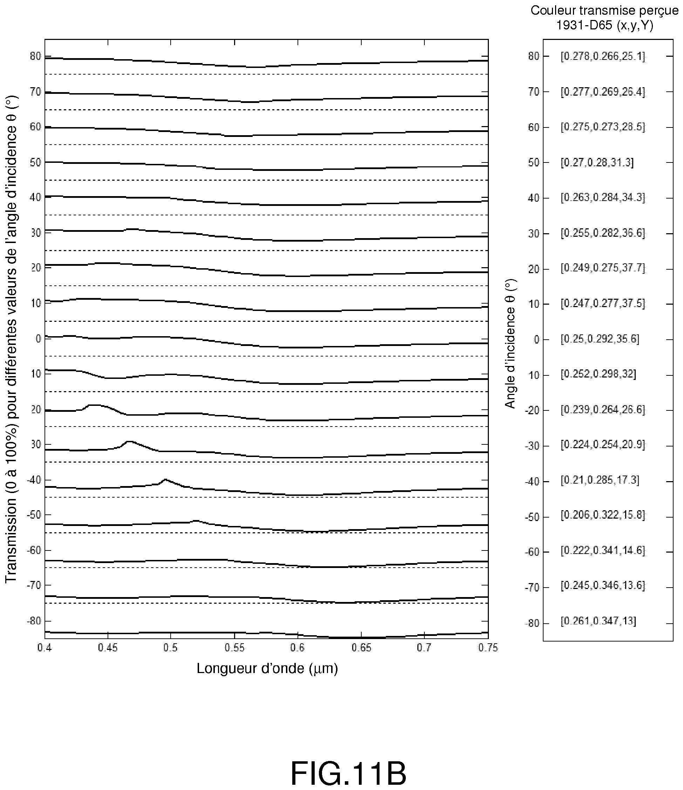

Les FIGS. 11A et 11B représentent ainsi des simulations numériques montrant le spectre en transmission et la couleur transmise perçue (coordonnées colorimétriques et transmission sur l'ensemble du spectre visible), en fonction de l'angle d'incidence dans le matériau diélectrique, pour deux exemples particuliers de composants optiques de sécurité.

Les spectres en transmission sont calculés pour un ensemble de nano-lamelles métalliques en Aluminium d'épaisseur $e = 20$ nm, formées par évaporation de métal sur un réseau de période $\Lambda = 220$ nm et de hauteur $h = 300$ nm, selon une direction normale au plan du réseau. La dimension oblique de la nano-lamelle est d'environ $L = 370$ nm. Les nano-lamelles sont inclinées d'environ 54° dans les simulations représentées sur la FIG. 11A et FIG. 11B.

Dans la FIG 11A, sont montrées les propriétés optiques en transmission en incidence colinéaire avec le vecteur réseau pour différents angles d'incidence (dans l'air) d'un ensemble de nano-lamelles métalliques qui possèdent une géométrie arrondie comme illustrée sur la FIG. 10A pour un arrondi $t_1$ d'environ 30 nm. Cette dimension de 30 nm est définie hors du plan de l'oblique d'une nano-lamelle parfaitement oblique. Pour certains angles d'incidence positifs, la transmission de cette structure reste bonne avec plus de 60% de transmission et une distance au point neutre inférieure à 0,05 ; cela contraste avec une autre plage angulaire (angles négatifs) pour laquelle la distance au point neutre est supérieure à 0,10 et la transmission inférieure à 30%.

Dans la FIG. 11B, l'arrondi est bien supérieur et est d'environ 70 nm hors du plan de la nano-lamelle parfaitement oblique. La transmission de cette structure pour des angles d'incidence positifs devient très peu lumineuse (T<40%) avec des colorations visibles à la plupart des angles. Le défaut de fabrication est ici trop large et l'effet visuel recherché est trop dégradé.

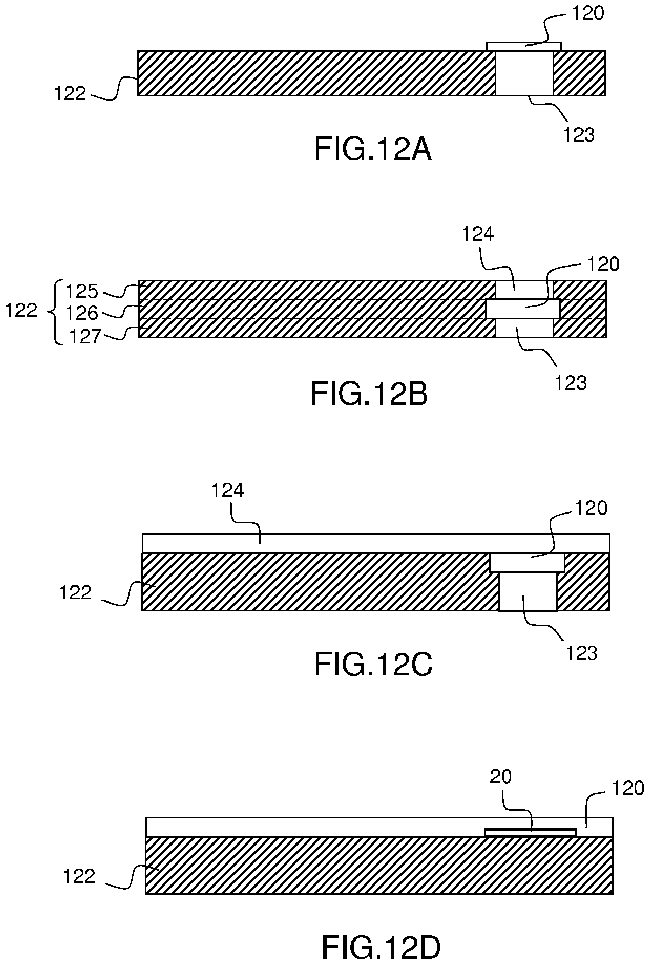

Les FIGS. 12A à 12D représentent des vues en coupe, partielles, d'exemples d'objets sécurisés intégrant un composant optique de sécurité 120 selon la présente description.

La FIG. 12A représente une vue en coupe d'un objet sécurisé, par exemple un document de valeur de type billet de banque, équipé d'un composant optique de sécurité 120 comprenant au moins une zone de couplage plasmonique telle que décrite précédemment. L'élément de sécurité 120 se présente par exemple sous forme d'une bande, typiquement de largeur 15 mm qui vient se fixer sur un support 122 du document. L'élément de sécurité 120 est fixé au support 122 par des moyens connus. Par exemple, dans le cas d'un document présentant une zone transparente solide, l'élément de sécurité peut être fixé par transfert à chaud réactivant une couche adhésive transparente préalablement appliquée sur la couche de fermeture 22 (FIG. 2A). Dans ce cas, une couche de détachement (par exemple une cire) peut être appliquée entre le vernis d'estampage 21 et le film support en PET (non représenté sur la FIG. 2A). On transfert l'élément de sécurité sur le document en pressant à chaud l'élément de sécurité sur le document, le composant plasmonique se trouvant face à la zone transparente. Pendant le transfert, le film adhésif colle sur le support 122 du document et la couche de détachement ainsi que le film support sont retirés. Dans le support 122 est prévue une fenêtre de transparence 123 au niveau de la zone de couplage plasmonique pour le contrôle en transmission du composant plasmonique.

Les FIGS 12B et 12C illustrent par des vues en coupe deux variantes d'un exemple de réalisation d'un objet sécurisé équipé d'un composant optique de sécurité 120. Dans ces deux exemples, le composant optique de sécurité est encapsulé dans le support 122 de l'objet sécurisé, par exemple un document de sécurité. Dans l'exemple de la figure 12B, le document sécurisé est par exemple obtenu par laminage de plusieurs couches 125, 126, 127, le composant optique de sécurité étant intégré dans la couche 126 du milieu, tandis que des zones de transparence 123, 124 sont prévues dans les couches extérieures 125, 127 pour assurer l'observation en transparence du composant optique de sécurité 120. Selon une variante, les couches 125, 126, 127 peuvent être fusionnées pour former un support 122 homogène dans lequel le composant optique de sécurité se trouve encapsulé. Dans l'exemple de la figure 12C, le composant optique de sécurité est fixé sur une première couche 122 formant support, l'ensemble étant recouvert d'une couche en matériau transparent 124. Une fenêtre de transparence 123 est prévue dans la couche support 122 pour assurer l'observation en transparence du composant optique de sécurité 120. Cette fenêtre de transparence peut être formée de vide ou d'un matériau localement transparent. Le document ainsi réalisé est par exemple un document de sécurité comme une carte d'identité ou un billet de banque muni de son fil de sécurité.

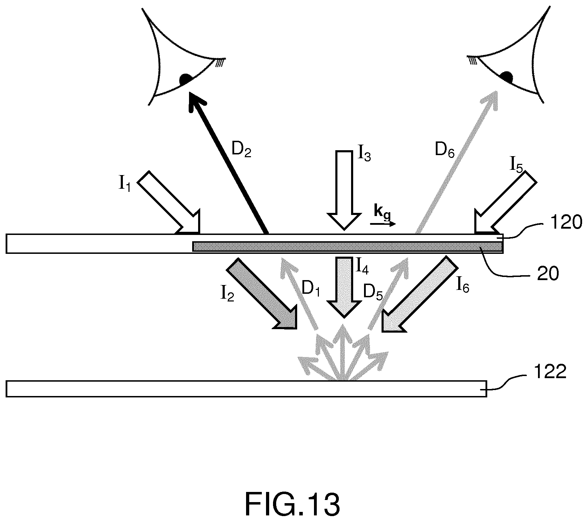

La FIG. 12D illustre par une vue en coupe partielle un exemple de réalisation d'un objet sécurisé comprenant un support 122 et un composant optique de sécurité 120 comprenant au moins une zone de couplage plasmonique 20. Au niveau de la zone de couplage plasmonique 20 le support n'est pas transparent ou évidé comme dans les exemples précédents, mais présente une surface diffusante. Il s'agit par exemple d'une surface en papier partiellement imprimée. Dans ce cas, l'observation du composant optique de sécurité 120 continue à se faire en transmission, la lumière diffusée par la surface diffusante agissant comme une source de lumière visible pour l'observateur, comme cela est illustré plus en détails sur la FIG. 13. Le composant optique de sécurité 120 peut ainsi permettre d'observer le document ou objet diffusant 122 à travers le filtrage du composant optique de sécurité décrit.

La FIG. 13 illustre les effets de transmission dans un objet sécurisé du type de celui illustré sur la FIG. 12D, mais les différents éléments sont montrés de façon à voir la transmission des faisceaux. En pratique, la lumière ambiante permettant l'observation et le contrôle du composant optique de sécurité 120 peut provenir de multiples sources et peut former différents faisceaux lumineux $I_1$, $I_3$, $I_5$ présentant différents angles d'incidence. En général pour effectuer un contrôle, un observateur se placera de façon à avoir un bon éclairage du document ou du bien sécurisé, et donc intuitivement avec une lumière d'incidence peu éloignée de la normale de la surface comprenant le composant optique de sécurité. Les faisceaux passent à travers le composant optique de sécurité et sont filtrés en partie en fonction de l'angle d'incidence pour former les faisceaux $I_2$, $I_4$, $I_6$ respectivement. Sur chaque portion de surface 122 du document ou objet diffusant, les différents faisceaux d'éclairage incidents sont diffusés et réfléchis vers le composant optique de sécurité 120 avec à nouveau une bonne luminosité et neutralité en couleur (faisceaux $D_1$, $D_5$). Lorsque cette lumière rétrodiffusée passe à travers le ou les motifs du composant de sécurité, chaque motif produira suivant l'angle d'observation un filtrage coloré ou non (faisceaux D2, D6). L'effet optique en transmission peut donc également être observé en rétro-réflexion grâce à la bonne transparence et la neutralité en couleur du composant de sécurité sur de larges plages angulaires. En outre, des interactions entre le support 122 du composant optique de sécurité et le composant peuvent être prévues par l'homme du métier, pour afficher des images spécifiques à certains angles ou présentant de très forts contrastes angulaires, par exemple de type Moiré.

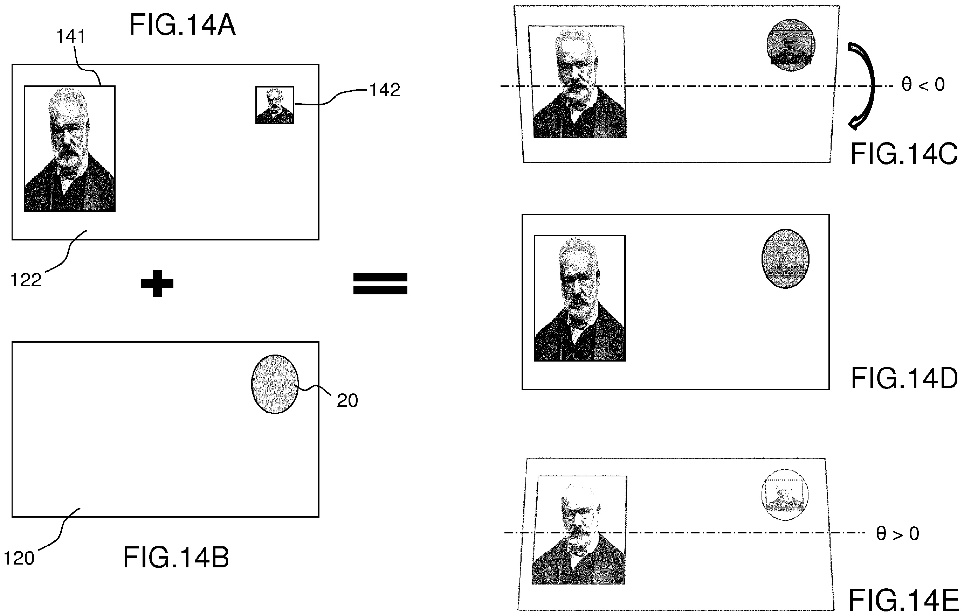

Les FIGS. 14A à 14E illustrent les effets visuels obtenus avec un exemple d'objet sécurisé équipé d'un composant optique de sécurité, du type de celui montré sur la FIG. 12D, en fonction de l'angle d'observation.

La FIG. 14A représente le support 122 d'un document de sécurité, pouvant être par exemple en papier diffusant, et présentant des informations d'identifications du porteur du document comme les photos 141 et 142. La FIG. 14B représente un composant optique de sécurité 120 avant application sur le support 122 et comprenant notamment une zone de couplage plasmonique 20 selon la présente description. Le composant optique de sécurité 120 peut comprendre d'autres éléments optiques de sécurité, par exemple des éléments holographiques, pour former d'autres effets visuels. L'application du composant optique de sécurité 120 sur le support 122 permet de former le document de sécurité fini. La figure 14D présente le document de sécurité fini pour un angle d'observation θ≈0°. Dans ce cas la zone plasmonique est peu transmise mais permet par rétrodiffusion d'apercevoir la photo 142. La figure 14C présente le document de sécurité fini pour un angle d'observation θ < 0°. Dans ce cas la rétrodiffusion du support 122 permet d'apercevoir la photo 142 colorée. La figure 14E présente le document de sécurité fini pour un angle d'observation θ > 0°. Dans ce cas la rétrodiffusion du support 122 est neutre en couleur et permet de nettement observer la photo 142

Le document sécurisé ainsi obtenu est très facilement contrôlable par un utilisateur peu expérimenté, et avec une grande fiabilité. Comme précédemment expliqué, le composant optique de sécurité de type plasmonique selon la présente description pourra se présenter comme un film de sécurité dont les caractéristiques peuvent être contrôlées à l'oeil dans le visible. Une authentification visuelle du document sécurisé est donc possible, en lumière naturelle et en lumière artificielle ayant une qualité chromatique pauvre, de type lampe fluorescente. Cette authentification, basée sur des effets visuels en transmission différents selon l'angle d'observation du composant, est particulièrement facile à réaliser. De plus, du fait de la forte luminosité sur une plage angulaire d'observation qui contraste avec une luminosité plus faible sur une autre plage angulaire d'observation, l'authentification peut également être réalisée par une personne atteinte de daltonisme - soit prêt d'un homme sur 10 dans de nombreux pays.

En pratique, un observateur pourra contrôler le document sécurisé en observant en transmission le composant plasmonique selon la présente description devant une source de lumière blanche. Alternativement, on pourra contrôler le composant de sécurité en le plaçant sur un support lumineux orientable, comme par exemple un écran de smartphone, tablette ou ordinateur portable. La variation des propriétés de la transmission étant principalement liée à celle de la composante polarisée TM, l'observation sur une source blanche polarisée, comme un écran LCD permet un deuxième type de contrôle pour les observateurs avertis.

Pour raison de simplicité et de représentation en 2 dimensions, les variations angulaires représentés le sont principalement autour d'un axe de rotation. Ces représentations ne limitent en rien la mise en oeuvre du composant optique de sécurité pouvant être tourné dans les 3 dimensions.

Le composant optique de sécurité en transmission d'ordre zéro peut être combiné latéralement ou verticalement (par empilement) avec d'autres composants optiques de sécurité optique d'ordre zéro, ces composants pouvant se renforcer l'un l'autre, se compléter ou fournir un contraste entre l'un et l'autre.

Différents motifs de nano-lamelles peuvent être réalisés et alignés à des motifs du support du composant optique de sécurité. Alternativement, ces différents motifs peuvent être conçus pour avoir des transitions de la neutralité angulaire vers une coloration à des angles différents mais proches pour créer des effets d'animations. Les angles de transitions entres les différentes plages angulaires peuvent être modifiés par changement de l'orientation des nano-lamelles sur les différents motifs, de leur périodes, de leur inclinaison et de leur longueur.

Le composant optique de sécurité peut être conçu pour filtrer sélectivement une lumière non visible en transmission permettant de moduler l'intensité d'une réémission de lumière visible, par exemple en filtrant une lumière UV selon différentes plages angulaires pour permettre de moduler l'intensité d'une fluorescence.

Bien que décrite à travers un certain nombre d'exemples de réalisation, le composant optique de sécurité selon l'invention et le procédé de fabrication dudit composant comprennent différentes variantes, modifications et perfectionnements qui apparaîtront de façon évidente à l'homme de l'art, étant entendu que ces différentes variantes, modifications et perfectionnements font partie de la portée de l'invention telle que définie par les revendications qui suivent. En particulier l'homme de l'art saura combiner avantageusement les propriétés optiques des nombreux composants de sécurité optique connus avec les propriétés du composant optique de sécurité selon l'invention.

**Revendications**

1. Composant optique de sécurité à résonance plasmonique (10) destiné à être observé en transmission dans une bande spectrale d'observation visible, comprenant :

   - au moins un premier ensemble de nano-lamelles métalliques (24), obliques ou quasi-obliques, parallèles, inclinées selon un angle d'inclinaison ($\alpha$) compris entre 30° et 80° par rapport au plan du composant, arrangées de façon périodique selon une direction avec une période ($\Lambda$) sub longueur d'onde ;
   - au moins une première et une deuxième couches en matériau diélectrique (21, 22), transparentes dans la bande spectrale d'observation, ledit premier ensemble de nano-lamelles étant encapsulé entre les première et deuxième couches en matériau diélectrique ;

   et dans lequel :

   - le premier ensemble de nano-lamelles métalliques forme une première zone de couplage plasmonique (20) permettant le couplage dans une première plage de longueurs d'onde d'ondes incidentes d'angles d'incidence compris dans une première plage angulaire d'incidence avec des modes de plasmon supportés par lesdites nano-lamelles métalliques, de telle sorte à former lors de l'observation en transmission du composant un premier motif coloré selon ladite première plage angulaire d'incidence et un motif neutre en couleurs selon une deuxième plage angulaire d'incidence, les première et deuxième plages angulaires d'incidence étant situées de part et d'autre de la normale au plan du composant.

2. Composant optique de sécurité selon la revendication 1, dans lequel la zone de couplage plasmonique (20) forme dans la deuxième plage angulaire d'observation un motif neutre en couleurs produisant un spectre lumineux dont la distance au point blanc du nuancier de couleurs CIE de 1931 est inférieure à 0,08, le composant optique de sécurité présentant en outre une transmission dans la bande spectrale d'observation supérieure à 50% dans la deuxième plage angulaire.

3. Composant optique de sécurité à résonance plasmonique (10) destiné à être observé en transmission dans une bande spectrale d'observation proche UV ou proche infrarouge, non visible, comprenant :

   - au moins un premier ensemble de nano-lamelles métalliques (24), obliques ou quasi-obliques, parallèles, inclinées selon un angle d'inclinaison ($\alpha$) compris entre 30° et 80° par rapport au plan du composant, arrangées de façon périodique selon une direction avec une période ($\Lambda$) sub longueur d'onde ;
   - au moins une première et une deuxième couches en matériau diélectrique (21, 22), transparentes dans la bande spectrale d'observation, ledit premier ensemble de nano-lamelles étant encapsulé entre les première et deuxième couches en matériau diélectrique ;

   et dans lequel :

   - le premier ensemble de nano-lamelles métalliques forme une première zone de couplage plasmonique permettant le couplage dans une première plage de longueurs d'onde d'ondes incidentes d'angles d'incidence compris dans une première plage angulaire d'incidence avec des modes de plasmon supportés par lesdites nano-lamelles métalliques, de telle sorte à former lors de l'observation en transmission du composant un premier motif sombre selon ladite première plage angulaire d'incidence et un motif clair selon une deuxième plage angulaire d'incidence, les première et deuxième plages angulaires d'incidence étant situées de part et d'autre de la normale au plan du composant.

4. Composant optique de sécurité selon l'une quelconque des revendications précédentes, dans lequel la dimension oblique (L) des nano-lamelles est égale au rapport entre la période ($\Lambda$) et le cosinus de l'angle d'inclinaison ($\alpha$) par rapport au plan du composant optique de sécurité.

5. Composant optique de sécurité selon l'une quelconque des revendications précédentes, comprenant en outre :

- au moins un deuxième ensemble de nano-lamelles métalliques, obliques ou quasi-obliques, parallèles, inclinées entre 30° et 80° par rapport au plan du composant, arrangées de façon périodique avec une période sub longueur d'onde, encapsulé entre les première et deuxième couches en matériau diélectrique et présentant une inclinaison et/ou une orientation par rapport à la normale au plan du composant différentes de l'inclinaison et/ou de l'orientation des nano-lamelles métalliques formant le premier ensemble de nano-lamelles métalliques.

6. Composant optique de sécurité selon la revendication 5, dans lequel les nano-lamelles des premier et deuxième ensembles de nano-lamelles sont symétriques par rapport à la normale au plan du composant.

7. Composant optique de sécurité selon l'une quelconque des revendications 5 ou 6, dans lequel les deux zones de couplage plasmonique forment des motifs complémentaires.

8. Composant optique de sécurité selon l'une quelconque des revendications précédentes, dans lequel la différence des indices de réfraction desdits matériaux diélectriques transparents formant chacune desdites couches est inférieure à 0,1.

9. Objet sécurisé comprenant un support et un composant optique de sécurité selon l'une quelconque des revendications précédentes, agencé sur ledit support.

10. Objet sécurisé selon la revendication 9, dans lequel le support comprend une zone diffusante au niveau de laquelle est agencée la zone de couplage plasmonique, permettant une observation en transmission à travers le composant optique de sécurité grâce à la lumière rétrodiffusée par la zone diffusante.

11. Procédé de fabrication d'un composant optique de sécurité à effet plasmonique selon l'une quelconque des revendications 1 à 8 comprenant :

    - La formation de ladite première couche en matériau diélectrique transparente, structurée pour former la première zone de couplage ;
    - le dépôt d'une couche métallique sur la première couche en matériau diélectrique structurée, formant ainsi le premier ensemble de nano-lamelles métalliques ;
    - l'encapsulation de ladite couche métallique par la seconde couche en matériau diélectrique.

12. Procédé selon la revendication 11, dans lequel la couche métallique est obtenue par évaporation de métal selon une direction normale au plan du composant.

**Patentansprüche**

1. Optische Plasmonresonanz-Sicherheitskomponente (10) zur Beobachtung in Transmission in einem sichtbaren Beobachtungsspektralband, umfassend:

    - mindestens einen ersten Satz von schrägen oder quasi-schrägen, parallelen, metallischen Nanolamellen (24), welche mit einem Neigungswinkel ($\alpha$) zwischen 30° und 80° bezüglich der Komponentenebene geneigt sind, in einer Richtung periodisch mit einer Periode ($\Lambda$) unterhalb der Wellenlänge angeordnet sind;
    - mindestens eine erste und eine zweite Schicht aus dielektrischem Material (21, 22), die in dem Beobachtungsspektralband transparent sind, wobei der erste Satz von Nanolamellen zwischen der ersten und der zweiten Schicht aus dielektrischem Material eingeschlossen ist;

und wobei:

    - der erste Satz von metallischen Nanolamellen eine erste Zone plasmonischer Kopplung (20) bildet, welche in einem ersten Wellenlängenbereich die Kopplung von Wellen, die mit Einfallswinkeln in einem ersten Einfallswinkelbereich einfallen, mit Plasmonmoden, die von den metallischen Nanolamellen unterstützt werden, ermöglicht, um bei Beobachtung der Komponente in Transmission in dem ersten Einfallswinkelbereich ein erstes farbiges Muster zu bilden und in einem zweiten Einfallswinkelbereich ein farbneutrales Muster zu bilden, wobei sich der erste und der zweite Einfallswinkelbereich zu beiden Seiten der Normalen der Komponentenebene befinden.

2. Optische Sicherheitskomponente nach Anspruch 1, wobei die Zone plasmonischer Kopplung (20) in dem zweiten Beobachtungswinkelbereich ein farbneutrales Muster bildet, das ein Lichtspektrum erzeugt, dessen Abstand zum Weißpunkt der CIE-Farbtafel von 1931 kleiner als 0,08 ist, wobei die optische Sicherheitskomponente ferner in dem zweiten Winkelbereich in dem Beobachtungsspektralband eine Transmission von mehr als 50% aufweist.

3. Optische Plasmonresonanz-Sicherheitskomponente (10) zur Beobachtung in Transmission in einem nicht-sichtbaren Nah-UV- oder Nah-Infrarot-Beobachtungsspektralband, umfassend:

    - mindestens einen ersten Satz von schrägen oder quasi-schrägen, parallelen, metallischen Nanolamellen (24), welche mit einem Neigungswinkel ($\alpha$) zwischen 30° und 80° bezüglich der Komponentenebene geneigt sind, in einer Richtung periodisch mit einer Periode ($\Lambda$) unterhalb der Wellenlänge angeordnet sind;
- mindestens eine erste und eine zweite Schicht aus dielektrischem Material (21, 22), die in dem Beobachtungsspektralband transparent sind, wobei der erste Satz von Nanolamellen zwischen der ersten und der zweiten Schicht aus dielektrischem Material eingeschlossen ist;

und wobei:

- der erste Satz von metallischen Nanolamellen eine erste Zone plasmonischer Kopplung bildet, welche in einem ersten Wellenlängenbereich die Kopplung von Wellen, die mit Einfallswinkeln in einem ersten Einfallswinkelbereich einfallen, mit Plasmonmoden, die von den metallischen Nanolamellen unterstützt werden, ermöglicht, um bei Beobachtung der Komponente in Transmission in dem ersten Einfallswinkelbereich ein erstes dunkles Muster zu bilden und in einem zweiten Einfallswinkelbereich ein helles Muster zu bilden, wobei sich der erste und der zweite Einfallswinkelbereich zu beiden Seiten der Normalen der Komponentenebene befinden.

4. Optische Sicherheitskomponente nach einem der vorhergehenden Ansprüche, wobei die schräge Abmessung (L) der Nanolamellen gleich dem Verhältnis zwischen der Periode ($\Lambda$) und dem Cosinus des Neigungswinkels ($\alpha$) bezüglich der Ebene der optischen Sicherheitskomponente ist.

5. Optische Sicherheitskomponente nach einem der vorhergehenden Ansprüche, ferner umfassend:

- mindestens einen zweiten Satz von schrägen oder quasi-schrägen, parallelen, metallischen Nanolamellen, welche zwischen 30° und 80° bezüglich der Komponentenebene geneigt sind, periodisch mit einer Periode unterhalb der Wellenlänge angeordnet sind, zwischen der ersten und der zweiten Schicht aus dielektrischem Material eingeschlossen ist und eine Neigung und/oder eine Orientierung bezüglich der Normalen der Komponentenebene aufweisen, die von der Neigung und/oder der Orientierung der metallischen Nanolamellen verschieden sind, die den ersten Satz von metallischen Nanolamellen bilden.

6. Optische Sicherheitskomponente nach Anspruch 5, wobei die Nanolamellen des ersten und des zweiten Satzes von Nanolamellen bezüglich der Normalen der Komponentenebene symmetrisch sind.

7. Optische Sicherheitskomponente nach einem der Ansprüche 5 oder 6, wobei die zwei Zonen plasmonischer Kopplung komplementäre Muster bilden.

8. Optische Sicherheitskomponente nach einem der vorhergehenden Ansprüche, wobei die Differenz der Brechungsindizes der transparenten dielektrischen Materialien, die jede der Schichten bilden, kleiner als 0,1 ist.

9. Gesichertes Objekt, umfassend einen Träger und eine auf dem Träger angeordnete optische Sicherheitskomponente nach einem der vorhergehenden Ansprüche.

10. Gesichertes Objekt nach Anspruch 9, wobei der Träger eine an der Zone plasmonischer Kopplung angeordnete Streuzone umfasst, welche aufgrund des von der Streuzone zurückgestreuten Lichts eine Beobachtung in Transmission durch die optische Sicherheitskomponente ermöglicht.

11. Verfahren zur Herstellung einer optischen Sicherheitskomponente mit Plasmoneffekt nach einem der Ansprüche 1 bis 8, umfassend:

- Bilden der strukturierten ersten Schicht aus transparentem dielektrischem Material, um die erste Kopplungszone zu bilden;
- Abscheiden einer metallischen Schicht auf der strukturierten ersten Schicht aus dielektrischem Material, wodurch der erste Satz von metallischen Nanolamellen gebildet wird;
- Einschließen der metallischen Schicht durch die zweite Schicht aus dielektrischem Material.

12. Verfahren nach Anspruch 11, wobei die metallische Schicht durch Verdampfen von Metall in einer Richtung senkrecht zur Komponentenebene erhalten wird.

**Claims**

1. An optical security component with plasmon resonance (10) intended for being observed in transmission in a visible observation spectral band, comprising:

- at least a first set of metal nano-blades (24), oblique or almost oblique, parallel, tilted by a tilting angle ($\alpha$) of 30° and 80° relative to the plane of the component, arranged periodically in a direction with a subwavelength period ($\Lambda$);
- at least one first layer and one second layer made of a dielectric material (21, 22), transparent in the observation spectral band, with said first set of nano-blades being encapsulated between the first layer and the second layer of dielectric material;

and wherein:

- the first set of metal nano-blades forms a first plasmon coupling area (20) allowing the coupling of incident waves, in a first range of wavelengths, with angles of incidence comprised within a first angular range of incidence, with plasmon modes supported by said metal nano-blades, so as to form, during the observation in transmission of the component, a first coloured pattern according to said first angular range of incidence and a colour-neutral pattern according to a second angular range of incidence, with the first and second angular ranges of incidence being located on either side of the normal to the plane of the component.

2. The optical security component according to claim 1, wherein the plasmon coupling area (20) forms in the second angular range of observation a colour-neutral pattern producing a light spectrum whose distance to the white point of the 1931 CIE colour chart, is less than 0.08, the optical security component further having a transmission in the spectral observation band higher than 50% in the second angular range.

3. An optical security component with plasmon resonance (10) intended for being observed in transmission in a non visible, near ultraviolet or near infrared observation spectral band, comprising:

- at least a first set of metal nano-blades (24), oblique or almost oblique, parallel, tilted by a tilting angle ($\alpha$) of 30° and 80° relative to the plane of the component, arranged periodically in a direction with a subwavelength period ($\Lambda$);
- at least one first layer and one second layer made of a dielectric material (21, 22), transparent in the observation spectral band, with said first set of nano-blades being encapsulated between the first layer and the second layer of dielectric material;

and wherein:

- the first set of metal nano-blades forms a first plasmon coupling area allowing the coupling of incident waves, in a first range of wavelengths, with angles of incidence comprised within a first angular range of incidence, with plasmon modes supported by said metal nano-blades, so as to form, during the observation in transmission of the component, a first dark pattern according to said first angular range of incidence and a light pattern according to a second angular range of incidence, with the first and second angular ranges of incidence being located on either side of the normal to the plane of the component.

4. The optical security component according to any one of the preceding claims, wherein the oblique dimension (L) of the nano-blades is equal to the ratio between the period ($\Lambda$) and the cosine of the tilting angle ($\alpha$) relative the plane of the optical security component.

5. The optical security component according to any one of the preceding claims, further comprising:

- at least a second set of metal nano-blades, oblique or almost oblique, parallel, tilted by 30° and 80° relative to the plane of the component, arranged periodically in a direction with a subwavelength period, encapsulated between the first and second layers of dielectric material and having a tilting and/or an orientation relative to the normal to the plane of the component different from the tilting and/or the orientation of the metal nano-blades forming the first set of metal nano-blades.

6. The optical security component according to claim 5, wherein the nano-blades of the first and second sets of nano-blades are symmetrical with respect to the normal to the plane of the component.

7. The optical security component according to any one of claims 5 or 6, wherein the two plasmon coupling areas form complementary patterns.

8. The optical security component according to any one of the preceding claims, wherein the difference in the refractive indices of said transparent dielectric materials forming each of said layers is less than 0.1.

9. A secure object comprising a support and an optical security component according to any one of the preceding claims, arranged on said support.

10. The secure object according to claim 9, wherein the support comprises a diffusing area at which the plasmon coupling area is arranged, allowing the observation in transmission through the optical security component thanks to the light backscattered by the diffusing area.

11. A method for making a security optical component with plasmon effect according to any one of claims 1 to 8, comprising:

- the formation of said first layer of transparent dielectric material, so structured as to form the first coupling area;
- the deposition of a metal layer on the first layer of structured dielectric material, thereby forming the first set of metal nano-blades;
- the encapsulation of said metal layer by the second layer of dielectric material.

12. The method according to claim 11, wherein the metal layer is obtained by evaporation of metal in a direction normal to the plane of the component.

p

4

3

2

1

ART ANTERIEUR

# FIG.1A

Q

p

3

4

2

ART ANTERIEUR

# FIG.1B

FIG.2A

FIG.2B

FIG.3A

FIG.3B

FIG.4B

FIG.4D

FIG.4A

FIG.4E

FIG.4C

EP 3 334 611 B1

**recto**

FIG.5A

FIG.5B

FIG.5C

**verso**

FIG.5D

FIG.5E

FIG.5F

EP 3 334 611 B1

FIG.6

EP 3 334 611 B1

FIG.7A

FIG.7B

FIG.7C

FIG.8A

FIG.8B

FIG.8C

$\theta < 0$

$\theta > 0$

50

41

72

74

$I_1$  $I_2$  $I_3$  $I_4$

FIG.9A

FIG.9B

FIG.9C

**FIG.9D**

**FIG.9E**

**FIG.9F**

FIG.10A

FIG.10B

FIG.11A

FIG.11B

120

122

123

**FIG.12A**

124

120

122 {
125
126
127
}

123

**FIG.12B**

124

120

122

123

**FIG.12C**

20

120

122

**FIG.12D**

FIG.13

FIG.14A

141

142

+

=

122

20

FIG.14B

120

θ < 0

FIG.14C

FIG.14D

θ > 0

FIG.14E

FIG.15

## RÉFÉRENCES CITÉES DANS LA DESCRIPTION

**Documents brevets cités dans la description**

- US 20100307705 A
- WO 2012136777 A1

**Littérature non-brevet citée dans la description**

- **M.G.MOHARAM et al.** Rigourous coupled wavelength analysis of metallic surface relief grating. *Journal Of the Optical Society of America,* 1986, vol. 3 (11), 1780-1787
- **CHRISTOPHER PLAMER.** Replicated Grating. 2006